(19) **Europäisches Patentamt** / **European Patent Office** / **Office européen des brevets**

(11) **EP 4 538 852 B1**

(12) **EUROPEAN PATENT SPECIFICATION**

(45) Date of publication and mention
of the grant of the patent:
**15.07.2026 Bulletin 2026/29**

(21) Application number: **23876326.2**

(22) Date of filing: **15.08.2023**

(51) International Patent Classification (IPC):
**G06F 3/0481** (2022.01)    **G06F 3/0483** (2013.01)

(52) Cooperative Patent Classification (CPC):
**G06F 3/0481; G06F 3/0483; G06F 3/14;**
**G06T 13/80; G09G 5/393**

(86) International application number:
**PCT/CN2023/113151**

(87) International publication number:
**WO 2024/078121 (18.04.2024 Gazette 2024/16)**

(54) **IMAGE PROCESSING METHOD AND ELECTRONIC DEVICE**

**BILDVERARBEITUNGSVERFAHREN UND ELEKTRONISCHE VORRICHTUNG**

**PROCÉDÉ DE TRAITEMENT D'IMAGES ET DISPOSITIF ÉLECTRONIQUE**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **13.10.2022 CN 202211253545**

(43) Date of publication of application:
**16.04.2025 Bulletin 2025/16**

(73) Proprietor: **Honor Device Co., Ltd.**
**Shenzhen, Guangdong 518040 (CN)**

(72) Inventors:
• **CAI, Lifeng**
**Shenzhen, Guangdong 518040 (CN)**

• **DU, Hongyan**
**Shenzhen, Guangdong 518040 (CN)**
• **HUANG, Tonghuan**
**Shenzhen, Guangdong 518040 (CN)**
• **LI, Shijin**
**Shenzhen, Guangdong 518040 (CN)**

(74) Representative: **Isarpatent**
**Patent- und Rechtsanwälte**
**Barth Hassa Peckmann & Partner mbB**
**Friedrichstraße 31**
**80801 München (DE)**

(56) References cited:
**CN-A- 112 422 873     CN-A- 114 092 595
CN-A- 114 579 075     US-A1- 2009 002 381
US-A1- 2015 161 756     US-A1- 2017 365 086**

## Description

This application claims priority to Chinese Patent Application No. 202211253545.4, filed with the China National Intellectual Property Administration on October 13, 2022 and entitled "IMAGE PROCESSING METHOD AND ELECTRONIC DEVICE.

## TECHNICAL FIELD

This application relates to the field of terminal technologies, and in particular, to an image processing method and an electronic device.

## BACKGROUND

With the development of terminal technologies, performance of interaction of various terminals (for example, mobile phones) with users is increasingly optimized. For example, a terminal can improve user experience by setting a dynamic effect corresponding to an operation. The dynamic effect is a dynamic display effect formed by continuously displaying a plurality of frames of images. Displaying a picture by an electronic device through a display screen usually needs to be subjected to processes such as drawing, rendering, and synthesis.
An application process of the electronic device is responsible for drawing and rendering image frames in the displayed picture, and a synthesis thread of the electronic device is responsible for synthesizing the drawn and rendered image frames and sending the synthesized image frames for display.
However, in some cases, the application process cannot normally draw the image frames, a frame loss situation occurs in the image frames. As a result, a display stalling problem is caused for the image frames sent by a surface flinger for display.
CN114092595A describes an image processing method and an electronic device, to reduce a frame loss possibility in image displaying by the electronic device, ensure smoothness of images displayed on a display, and improve visual experience of a user.

## SUMMARY

Embodiments of this application provide an image processing method and an electronic device, to avoid a problem of an excessively large displacement caused by an excessively large displacement interval of drawing two image frames in a process of drawing image frames with a dynamic effect, and ensure coherent display of the image frames with the dynamic effect, thereby making a display effect smoother and more fluent.
To achieve the foregoing objective, the following technical solutions are used in embodiments of this application.
According to a first aspect, an image processing method is provided. The method includes:

receiving, by an electronic device, a first operation performed by a user on a touch screen of the electronic device; starting, by the electronic device, a first application in response to the first operation; receiving, by the electronic device, a second operation performed by the user on the touch screen of the electronic device; and exiting, by the electronic device, the first application in response to the second operation,

where in a process from starting of the first application to exiting of the first application, the electronic device performs drawing, rendering, and synthesis operations on a first image frame and a second image frame of the first application; and
the performing, by the electronic device, drawing, rendering, and synthesis operations on a first image frame and a second image frame of the first application includes:
performing, by an application process, drawing and rendering on the first image frame in a drawing and rendering period of the first image frame, and storing the obtained first image frame into a free buffer object in a buffer queue; sending, by a synthesis thread when the synthesis thread performs no synthesis operation in a synthesis period of the first image frame, a first adjustment request to the application process; and increasing, by the application process based on the first adjustment request, a count of free buffer objects in the buffer queue, to cause the application process to draw and render the second image frame in a drawing and rendering period of the second image frame and then store the obtained second image frame into a free buffer object in the buffer queue.

The drawing and rendering period of the second image frame is later than the drawing and rendering period of the first image frame, a drawing start moment of the second image frame is different from a drawing start moment of the first image frame by N periods, and N is a positive integer.
In this application, when a surface flinger does not perform synthesis, free buffer objects in a buffer queue can be dynamically increased, and the application process can continuously normally acquire a free buffer object and store a rendered image frame into the free buffer object, thereby avoiding a problem in an existing technology that an application process cannot acquire a free buffer object and store a rendered image frame into the free buffer object, and performs no rendering operation on a next image frame, thereby causing frame loss to occur in drawing of the next image frame. Through the image processing method provided in this application, at least one free buffer object in the buffer queue can be always used by the application process, to avoid a problem of frame loss occurring when the application process does not perform drawing and rendering operations on image frames because there is no free buffer object in the buffer queue, thereby resolving a problem of visual stalling that occurs after image frames are sent for display and that is caused by the frame loss. By ensuring that the application process has sufficient free buffer objects to perform a storage operation on rendered image frames, fluency of an effect of dynamically displaying the image frames sent for display is ensured.

In a possible implementation of the first aspect, the first image frame and the second image frame are image frames in a starting process of the first application.

In this application, in a starting process in which the electronic device executes an application, image processing is performed on an image frame whose dynamic effect is started in the starting process. When the synthesis thread performs no synthesis operation, a count of free buffer objects in the buffer queue is dynamically increased, so that at least one free buffer object in the buffer queue is always used by the application process. The application process can store a rendered image frame into a free buffer object in the buffer queue in a drawing and rendering period of each image frame, to avoid a case that frame loss may occur in a process in which the application process draws and renders image frames, resolve a problem of display stalling that occurs after an image frame is sent for display and that is caused because of the frame loss, and improve display fluency of starting a dynamic effect in an application starting process.

In a possible implementation of the first aspect, the first image frame and the second image frame are image frames in a process of switching, by the electronic device, from a first refresh rate to a second refresh rate in the starting process of the first application; and the first refresh rate is less than the second refresh rate.

The first refresh rate may be 60 Hz, that is, 60 frames of pictures are refreshed in 1 second, and one frame picture is refreshed every 16.6 milliseconds. The second refresh rate may be 90 Hz, that is, 90 frames of pictures are refreshed in 1 second, and one frame picture is refreshed every 11.1 milliseconds.

In this application, in a scenario of switching between refresh rates, the image processing method provided in this embodiment can effectively resolve a problem that in an application starting process, because of switching between refresh rates, processing periods of the synthesis thread and the application process are asynchronous, and the synthesis thread considers that tasks are piled up for to-be-synthesized image frames and performs no synthesis operation, and consequently no buffer object is released in the buffer queue.

In a possible implementation of the first aspect, the first image frame and the second image frame are image frames after starting of the first application is completed.

In this application, for different scenarios, after starting of the first application is completed, the image processing method provided in this embodiment can still dynamically increase a count of free buffer objects in the buffer queue when the synthesis thread performs no synthesis operation, thereby resolving a problem of display stalling that occurs after an image frame is sent for display and that is caused because of the frame loss after starting of the first application is completed, for example, in an internal image display process of the first application, and improving display fluency of an internally displayed image of the application.

In a possible implementation of the first aspect, the first image frame and the second image frame are image frames in an exiting process of the first application.

In this application, in an exiting process in which the electronic device executes an application, image processing is performed on an image frame whose dynamic effect is exited in the exiting process. When the synthesis thread performs no synthesis operation, a count of free buffer objects in the buffer queue is dynamically increased, so that at least one free buffer object in the buffer queue is always used by the application process. The application process can store a rendered image frame into a free buffer object in the buffer queue in a drawing and rendering period of each image frame, to avoid a case that frame loss may occur in a process in which the application process draws and renders image frames, resolve a problem of display stalling that occurs after an image frame is sent for display and that is caused because of the frame loss, and improve display fluency of exiting a dynamic effect in an application exiting process.

In a possible implementation of the first aspect, the first image frame and the second image frame are image frames in a process of switching, by the electronic device, from a first refresh rate to a second refresh rate in the exiting process of the first application; and the first refresh rate is less than the second refresh rate.

The first refresh rate may be 60 Hz, that is, 60 frames of pictures are refreshed in 1 second, and one frame picture is refreshed every 16.6 milliseconds. The second refresh rate may be 90 Hz, that is, 90 frames of pictures are refreshed in 1 second, and one frame picture is refreshed every 11.1 milliseconds.

In this application, in a scenario of switching between refresh rates, the image processing method provided in this embodiment can effectively resolve a problem that in an application exiting process, because of switching between refresh rates, processing periods of the synthesis thread and the application process are asynchronous, and the synthesis thread considers that tasks are piled up for to-be-synthesized image frames and performs no synthesis operation, and consequently no buffer object is released in the buffer queue.

In a possible implementation of the first aspect, the drawing and rendering period of the second image frame is a next period of the drawing and rendering period of the first image frame; and the drawing start moment of the second image frame is different from the drawing start moment of the first image frame by one period.

In this application, the drawing start moment of the second image frame is different from the drawing start moment of the first image frame by one period. If the synthesis thread performs no synthesis operation in the synthesis period of the first image frame, drawing and rendering of the second image frame are affected. Because the second image frame and the first image frame are adjacent image frames, an evident image frame display stalling problem occurs when frame loss occurs in the second image frame. Based on this, when the second image frame and the first image frame are adjacent image frames, an effect of the image processing method provided in this application is more significant. When the synthesis thread performs no synthesis operation, a count of free buffer objects in the buffer queue is dynamically increased, so that at least one free buffer object in the buffer queue is always used by the application process. The application process can store a rendered image frame into a free buffer object in the buffer queue in the drawing and rendering period of the second image frame, to avoid a case that frame loss may occur in a process in which the application process draws and renders image frames, resolve a problem of display stalling that occurs after an image frame is sent for display and that is caused because of the frame loss, and improve display fluency of image frames.

In a possible implementation of the first aspect, the first adjustment request includes a first indication value; and the first indication value is used for indicating an increased count of buffer objects, and the increasing a count of free buffer objects in the buffer queue includes: adding, by the application process, free buffer objects of the first indication value to the buffer queue.

In this application, the application process can increase the count of the free buffer objects in the buffer queue according to the first indication value. In actual application, the first indication value may be 1, 2, 3, or the like, the indication value can be adjusted according to different situations, and such an effect of dynamically adjusting the buffer queue is better.

In a possible implementation of the first aspect, the adding, by the application process, free buffer objects of the first indication value to the buffer queue includes: adding, by the application process, addresses of the free buffer objects of the first indication value to the buffer queue according to a queuing sequence.

In this application, the buffer objects in the buffer queue have an arrangement sequence, and the application process adds the addresses of the free buffer objects of the first indication value to the buffer queue according to a queuing sequence, which can ensure that no interference is caused to the original arrangement sequence of the buffer objects in the buffer queue.

In a possible implementation of the first aspect, the method further includes: querying, by the synthesis thread, a count of all buffer objects in the buffer queue; and stopping, by the synthesis thread if the count of all the buffer objects reaches a maximum buffer object count, sending the first adjustment request for the buffer objects to the application process.

In this application, because of a hardware performance requirement of the electronic device, a count of the buffer objects in the buffer queue has a maximum buffer object count. If the synthesis thread determines that the count of all the buffer objects in the buffer queue reaches the maximum buffer object count, the synthesis thread stops sending the first adjustment request used for adding a free buffer object to the application process, thereby ensuring normal running of the electronic device, and avoiding a problem that the electronic device is abnormal because buffer objects in the buffer queue cannot be increased.

In a possible implementation of the first aspect, after the storing the first image frame into a free buffer object in a buffer queue, the method further includes: acquiring and recording, by the synthesis thread, a storage moment at which the application process stores the first image frame into a target buffer object.

In this application, after the synthesis thread performs a synthesis operation on an image frame once, the synthesis thread can record a storage moment at which the application process stores the image frame into a target buffer object. The synthesis thread records each storage moment, and can determine, according to a time difference between storage moments, whether the application process completes drawing and rendering of the image frame.

In a possible implementation of the first aspect, the method further includes: determining, by the synthesis thread when the synthesis thread performs a synthesis operation in the synthesis period of the first image frame, a time difference between a current system moment and a storage moment at which an image frame recorded last is stored into the target buffer object; sending, by the synthesis thread if the time difference is greater than or equal to a preset time threshold, a second adjustment request for the buffer objects to the application process; and reducing, by the application process, the count of the free buffer objects in the buffer queue according to the second adjustment request.

Optionally, the synthesis thread can further determine a frame interval according to a current refresh rate. The preset time threshold may be M frame intervals, where M is 1, 2, 3, or the like.

In this application, after the synthesis thread performs a synthesis operation on an image frame once, the synthesis thread can record a storage moment at which the application process stores the image frame into a target buffer object. The synthesis thread can acquire a time difference between a current system time and a last storage moment. If the time difference is greater than the preset time threshold, it is determined that a situation of frame loss exists in a rendering thread. That the situation of frame loss exists means that the production speed of the application process is lower than the consumption speed of the synthesis thread and the buffer queue has sufficient free buffer queues available to the application process. Alternatively, the application process may have completed drawing of an image frame in the current scenario. In these cases, the synthesis thread can generate the second adjustment request for reducing buffer queues, to reduce a count of free buffer objects in the buffer queue, and occupation of storage resources can be reduced by releasing free buffer objects in the buffer queue in time.

In a possible implementation of the first aspect, the second adjustment request includes a second indication value, and the second indication value is used for indicating a reduced count of buffer objects; and the reducing the count of the free buffer objects in the buffer queue includes: subtracting, by the application process, free buffer objects of the second indication value from the buffer queue.

In this application, the application process can reduce the count of the free buffer objects in the buffer queue according to the second indication value in the second adjustment request. In actual application, the second indication value may be 1, 2, 3, or the like, the indication value can be adjusted according to different situations, and such an effect of dynamically reducing buffer queues is better.

In a possible implementation of the first aspect, the subtracting, by the application process, free buffer objects of the second indication value from the buffer queue includes: removing, by the application process, addresses of the free buffer objects of the second indication value from the buffer queue according to a dequeuing sequence.

In this application, the buffer objects in the buffer queue have an arrangement sequence, and the application process removes the addresses of the free buffer objects of the second indication value from the buffer queue according to a dequeuing sequence, which can ensure that no interference is caused to the original arrangement sequence of the buffer objects in the buffer queue.

In a possible implementation of the first aspect, the method further includes: querying, by the synthesis thread, a count of all buffer objects in the buffer queue; and stopping, by the synthesis thread if the count of all the buffer objects is reduced to a minimum buffer object count, sending the second adjustment request for the buffer objects to the application process.

In this application, because of a rendering performance requirement of the electronic device, a count of the buffer objects in the buffer queue has a minimum buffer object count. If the synthesis thread determines that the count of all the buffer objects in the buffer queue is reduced to the minimum buffer object count, the synthesis thread stops sending the second adjustment request used for subtracting a free buffer object to the application process, thereby ensuring normal running of the electronic device, and avoiding a problem that the electronic device is abnormal because buffer objects in the buffer queue cannot be reduced.

In a possible implementation of the first aspect, the method further includes:
acquiring, by the synthesis thread if the synthesis thread performs a synthesis operation in the synthesis period of the first image frame, a target buffer object from the buffer queue, where the drawn and rendered first image frame is stored in the target buffer object; and performing, by the synthesis thread, a synthesis operation on the drawn and rendered first image frame.

In this application, when the synthesis thread normally performs a synthesis operation on the first image frame, the synthesis thread normally acquires a buffer object stored in the rendered first image frame from the buffer queue, to synthesize the rendered first image frame, send the synthesized first image frame for display, and release space of the buffer object, so that the released free buffer object available to the application process can be obtained in time from the buffer queue.

According to a second aspect, an electronic device is provided. The electronic device includes: a memory, a display screen, and one or more processors. The memory, the display screen, and the processor are coupled; and The memory stores computer program code. The computer program code includes a computer instruction. The computer instruction, when executed by the processor, causes the electronic device to perform the method according to any item in the foregoing first aspect.

According to a third aspect, a computer-readable storage medium is provided. The computer-readable storage medium stores instructions, and when the instructions are run on an electronic device, the electronic device is enabled to perform the method according to any item in the foregoing first aspect.

According to a fourth aspect, a computer program product including instructions is provided. When the instructions are run on an electronic device, the electronic device is enabled to perform the method according to any item in the foregoing first aspect.

According to a fifth aspect, an embodiment of this application provides a chip. The chip includes a processor, and the processor is configured to call a computer program in a memory to perform the method according to the first aspect.

Understandably, for beneficial effects that can be achieved by the electronic device according to the second aspect, the computer-readable storage medium according to the third aspect, the computer program product according to the fourth aspect, and the chip according to the fifth aspect, reference may be made to the beneficial effects in the first aspect and any possible design of the first aspect, and details are omitted here.

## BRIEF DESCRIPTION OF DRAWINGS

FIG. 1 is a schematic diagram of normal display of a dynamic effect including starting of an application on an interface of a mobile phone according to an embodiment of this application;

FIG. 2 is a schematic diagram of normal display of a dynamic effect including off-screen slide on an interface of a mobile phone according to an embodiment of this application;

FIG. 3 is a schematic diagram of abnormal display of a dynamic effect including starting of an application on an interface of a mobile phone according to an embodiment of this application;

FIG. 4 is a schematic diagram of a hardware structure of an electronic device according to an embodiment of this application;

FIG. 5 is a schematic diagram of a software structure of an electronic device according to an embodiment of this application;

FIG. 6 is a sequence diagram of normal drawing, rendering, synthesis, and display of a plurality of image frames according to an embodiment of this application;

FIG. 7 is a diagram of a status change of a buffer in a buffer queue according to an embodiment of this application;

FIG. 8 is a sequence diagram of abnormal drawing, rendering, synthesis, and display of a plurality of image frames according to an embodiment of this application;

FIG. 9A and FIG. 9B are a schematic sequence diagram of multi-agent interaction in an abnormal drawing, rendering, synthesis, and display process of image frames according to an embodiment of this application;

FIG. 10 is a sequence diagram of a buffer count change in a buffer queue in an abnormal drawing, rendering, synthesis, and display process of image frames according to an embodiment of this application;

FIG. 11 is a flowchart of an image processing method in a scenario of a dynamic effect of starting of an application according to an embodiment of this application;

FIG. 12 is a schematic diagram of normal display of a dynamic effect including exiting of an application on an interface of a mobile phone according to an embodiment of this application;

FIG. 13 is a flowchart of an image processing method in a scenario of a dynamic effect of exiting of an application according to an embodiment of this application;

FIG. 14A, FIG. 14B, and FIG. 14C are a schematic sequence diagram of multi-agent interaction of dynamically adjusting a count of buffers in a buffer queue in a drawing, rendering, synthesis, and display process of image frames according to an embodiment of this application;

FIG. 15 is a sequence diagram of dynamically adjusting a count of buffers in a buffer queue in a drawing, rendering, synthesis, and display process of image frames according to an embodiment of this application; and

FIG. 16 is a schematic structural diagram of a chip system according to an embodiment of this application.

## DESCRIPTION OF EMBODIMENTS

In descriptions of the embodiments of this application, terms used in the following embodiments are only intended to describe particular embodiments, and are not intended to limit this application. As used in this specification and the appended claims of this application, singular expressions "a", "the", "the foregoing", and "this" are also intended to include an expression such as "one or more", unless otherwise clearly specified in the context. It should be further understood that, in the following embodiments of this application, "at least one" and "one or more" mean one or more than two (including two). The term "and/or" is used to describe an association relationship between associated objects, and indicates that three relationships may exist. For example, A and/or B may represent the following cases: Only A exists, both A and B exist, and only B exists. A and B may be singular or plural. The character "/" generally indicates an "or" relationship between the associated objects.

Reference to "one embodiment", "some embodiments", or the like described in this specification means that a specific feature, structure, or characteristic described with reference to this embodiment is included in one or more embodiments of this application. Therefore, statements such as "in one embodiment", "in some embodiments", "in some other embodiments" that appear in different parts of this application do not necessarily refer to same embodiments, but mean "one or more but not all embodiments", unless otherwise specifically emphasized in other manners. The terms "include", "include", "have", and variants thereof all mean "include but are not limited to", unless otherwise specifically emphasized in another manner. The term "connection" includes a direct connection and an indirect connection, unless otherwise specified. The terms "first" and "second" are used for descriptive purposes only and should not be construed as indicating or implying relative importance or implicitly indicating a quantity of technical features indicated.

In the embodiments of this application, terms such as "exemplary" or "for example" is used to represent giving an example, an illustration, or a description. Any embodiment or design solution described as an "exemplary" or "for example" in the embodiments of this application should not be explained as being more preferred or having more advantages than another embodiment or design solution. To be precise, the use of the terms such as "exemplary" or "for example" is intended to present a related concept in a specific manner.

An electronic device can display, through a display screen, a dynamic display effect (dynamic effect) of a picture triggered based on different operations. There is a type of dynamic effect in which display positions of different image frames are changing, and this type of dynamic effect is referred to as a first type of dynamic effect in this application. A dynamic effect in which display positions of image frames are not changing is referred to as a second type of dynamic effect.

The first type of dynamic effect further includes dynamic effects in which display positions of image frames are related to a system time, for example, a dynamic effect of starting of an application, a dynamic effect of exiting of an application, and a dynamic effect of off-screen slide. The dynamic effect of starting of an application refers to a dynamic effect displayed when the application is started. The dynamic effect of exiting of an application refers to a dynamic effect displayed when the application is exited. The dynamic effect of off-screen slide refers to a dynamic effect in which a user slides on a screen with a finger and an operation object continues to move after the finger leaves the screen. When each image frame in this type of dynamic effect is drawn, the electronic device needs to calculate a display position of the current image frame based on a system time of drawing the current image frame. The second type of dynamic effect includes a dynamic effect in a game scenario, a dynamic effect in an intra-application scenario, and a dynamic effect of touch latency in another scenario, and the like.

The image processing method provided in this application may be applied to all dynamic effect scenarios. For example, in a process of displaying a dynamic effect of starting of an application by the electronic device, an image frame in a process of the dynamic effect of starting of the application is processed based on the image processing method. For example, in a process of displaying a dynamic effect of exiting of an application by the electronic device, an image frame in a process of the dynamic effect of exiting of the application is processed based on the image processing method. For example, in a process of displaying a dynamic effect of off-screen slide by the electronic device, an image frame in a process of the dynamic effect of off-screen slide is processed based on the image processing method. For example, in a process of displaying a dynamic effect in a game scenario by the electronic device, an image frame in a process of the dynamic effect in the game scenario is processed based on the image processing method. For example, in a process of displaying a dynamic effect in an intra-application scenario by the electronic device, an image frame in a process of the dynamic effect in the intra-application scenario is processed based on the image processing method. For example, in each of other scenarios of a dynamic effect of touch latency, the electronic device can process an image frame in the dynamic effect of touch latency based on the image processing method.

Processing image frames based on the image processing method provided in this application can effectively avoid a situation in which frame loss occurs in the image frames in a drawing process of displaying the image frames with a dynamic effect, and further effectively resolve a problem of display stalling generated by displaying the image frames with the dynamic effect.

In some examples, that display positions of different image frames are different means that among the different image frames, distances between designated vertexes of the image frames (for example, upper left vertexes on interfaces) and origins of the image frames are different.

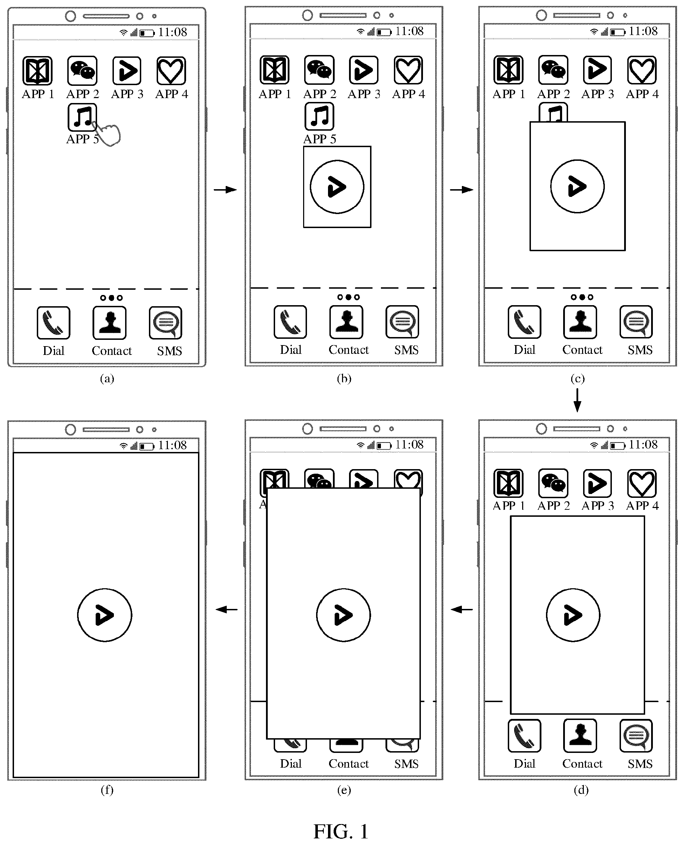

For example, FIG. 1 shows a schematic diagram of displaying a dynamic effect of starting an application using an example in which the electronic device is a mobile phone. Referring to (a) of FIG. 1, a user taps an icon of an application 5 on the desktop of the mobile phone. In response to the tap operation, the application 5 is started, and a dynamic effect of starting of the application 5 is displayed. Displayed pictures of the dynamic effect of starting of the application 5 are gradually displayed from (b) of FIG. 1 to (f) of FIG. 1, and image frames in the dynamic effect of starting of the application 5 include five image frames displayed from (b) of FIG. 1 to (f) of FIG. 1. It can be seen that distances between designate vertexes of the five image frames (for example, upper left vertexes on interfaces) and origins of the image frames are different, and the distances between the designate vertexes of the image frames (for example, the upper left vertexes on the interfaces) and the origins of the image frames gradually increase from (b) of FIG. 1 to (f) of FIG. 1, until a screen is fully laid with an image frame.

In some examples, that display positions of different image frames are different means that among the different image frames, distances between designated vertexes of the image frames (for example, upper left vertexes on interfaces) and origins of screens are different.

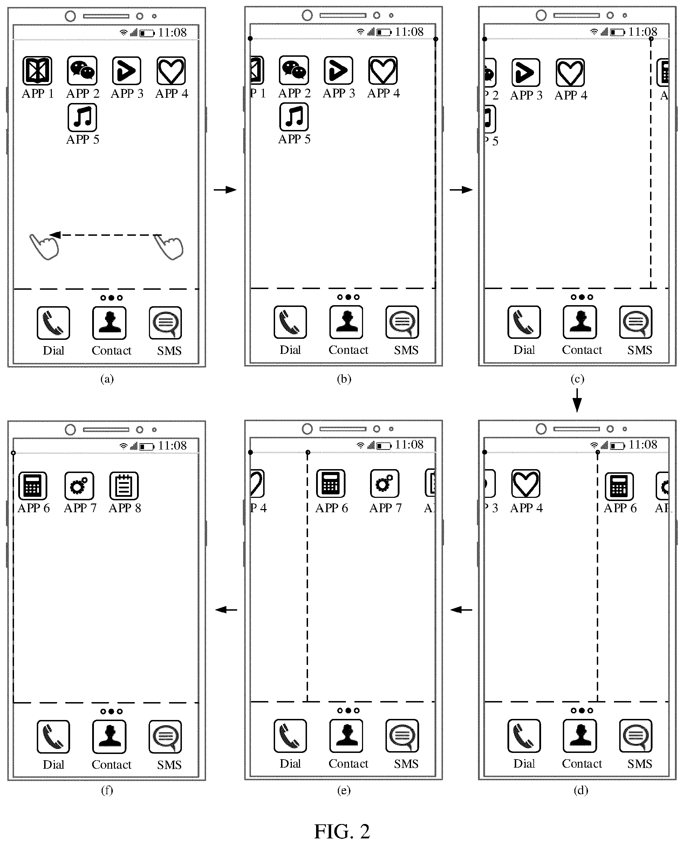

For example, FIG. 2 shows a schematic diagram of displaying a dynamic effect of off-screen slide using an example in which the electronic device is a mobile phone. Referring to (a) of FIG. 2, a current interface of FIG. 2 is a page 0 of the desktop, and the current interface includes an application 1, an application 2, an application 3, an application 4, and an application 5. A user performs a leftward slide operation on an interface of a current page of the desktop of the mobile phone, and in response to the leftward slide operation, the mobile phone displays an interface of a next page of the current interface with a dynamic effect of leftward slide, where the interface of the next page of the current interface is a page 1 of the desktop, and the interface of the page 1 includes an application 6, an application 7, and an application 8. Displayed pictures of the dynamic effect of slide triggered by the mobile phone in response to the leftward slide operation are gradually displayed from (b) of FIG. 2 to (f) of FIG. 2, and image frames in the dynamic effect of leftward slide include five image frames displayed from (b) of FIG. 2 to (f) of FIG. 2. It can be seen that distances between designate vertexes of the five image frames (for example, fixed points at which hollow circles are located in the drawing) and origins of screens (for example, fixed points at which solid circles are located in the drawing), and the distances between the designate vertexes of the image frames and the origins of the screens gradually decrease from (b) of FIG. 2 to (f) of FIG. 2, until the distance is 0 and the interface of the next page is completely displayed in the screen. In this embodiment, a minimum distance between a designated fixed point of an image frame and an origin of a screen can be determined according to an actual situation.

It may be understood that in some examples, that display positions of different image frames are different may alternatively mean that among the different image frames, distances between designated vertexes of the image frames and origins of the image frames and between the designated vertexes of the image frames and origins of screens are all different.

In the following embodiment of this application, description is made using an example in which the mobile phone displays a dynamic effect of starting an application. It may be understood that the image processing method provided in this embodiment of this application is also applicable to another type of dynamic effect.

In this embodiment of this application, a distance between a designated vertex of an image frame (for example, an upper left vertex on an interface) and an origin of the image frame is referred to as a displacement. A displacement change between adjacent image frames is referred to as a displacement interval.

For example, in a dynamic effect of starting an application, a displacement of a current image frame is a system time of drawing the current image frame /a total time of the dynamic effect * a total displacement, where the total time of the dynamic effect refers to a total time of displaying all image frames in the dynamic effect normally; and the total displacement refers to a displacement of a last frame of image in the dynamic effect.

In another example, a method for calculating a displacement $y(t)$ of a current image frame may alternatively be $y(t)=y(0)+t*n$, where $y(0)$ is a displacement of a first image frame in the dynamic effect; and n is a preset displacement interval. A manner of calculating t may be $t=\text{currenttime} - (\text{currenttime} - t0) \% \text{frame rate}$, where "%" is a remainder operation; currenttime is a current time; and t0 is a drawing time of the first image frame in the dynamic effect.

In a process of implementing a technology for displaying a dynamic effect of starting of an application, an application process of the application is used for drawing and rendering each image frame in the dynamic effect, where the application process further includes a main application thread and a rendering thread, the main application thread draws the image frame, and the rendering thread renders the image frame. A general synthesis thread is used for synthesizing the rendered image frame. Specifically, for each image frame in the dynamic effect, the main application thread calculates, based on a system time of drawing the current image frame, a displacement of drawing the current image frame, and draws the current image frame based on the calculated displacement. After obtaining the drawn image frame, the rendering thread renders the drawn image frame. After obtaining the rendered image frame, the synthesis thread synthesizes a plurality of layers in the rendered image frame. Then, the synthesis thread sends the synthesized image frame to a display driver for display. In the entire process, the main application thread, the rendering thread, the synthesis thread, and the display driver need to perform corresponding operations based on their respective corresponding trigger signals, thereby implementing operations of drawing, rendering, synthesis, and display of a plurality of image frames in the dynamic effect, and finally implementing coherent display of the plurality of image frames in the dynamic effect. Normally, a displacement interval between adjacent image frames is fixed. For example, as shown in FIG. 1, among the five image frames from (b) of FIG. 1 to (f) of FIG. 1, displacement intervals between all adjacent image frames remain unchanged, and in a process of displaying the dynamic effect of starting of the application 5, displayed pictures are coherent and fluent.

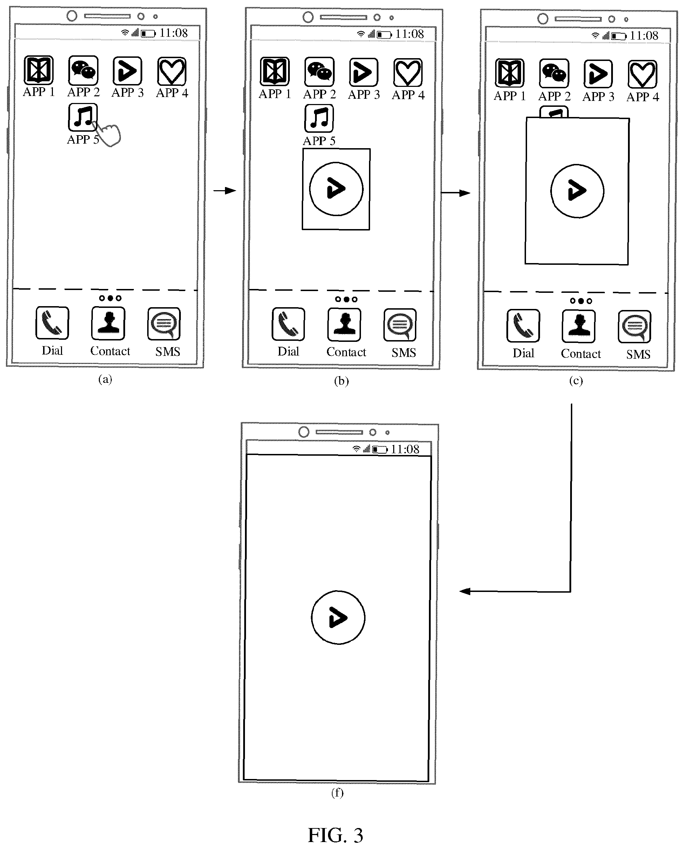

In a process of generating a dynamic effect of starting an application, the main application thread, the rendering thread, the synthesis thread, and the display driver each perform a corresponding operation when receiving their respective corresponding trigger signals. The trigger signals can include a drawing signal used for triggering the main application thread to perform a drawing operation, a synthesis signal used for triggering the synthesis thread to perform a synthesis operation, and the like. For example, the main application thread receives a drawing signal, and performs operations of calculating, based on a system time of drawing the current image frame, a displacement of drawing the current image frame, and drawing the current image frame based on the calculated displacement; and after obtaining the drawn image frame, the main application thread awakens the rendering thread to perform a rendering operation on the drawn image frame. The synthesis thread receives a synthesized signal, and performs a synthesis operation on a plurality of layers in the rendered image frame; and after obtaining a synthesized image frame, the synthesis thread sends the synthesized image frame to the display driver for display. If any one of the main application thread, the rendering thread, the synthesis thread, and the display driver performs no corresponding operation according to their respective corresponding trigger signals or trigger conditions, a deviation may be caused between calculation results of displacements of some image frames in the dynamic effect and displacements of the image frames in a normal case. For example, the rendering thread may not render the drawn image frame. Because the main application thread and the rendering thread are serial threads, if the rendering thread performs no rendering operation on the drawn image frame, the main application thread cannot perform a drawing operation on a new image frame in the reaction on the main application thread. Finally, the main application thread is disabled from performing a drawing operation on the current image frame after performing a drawing operation on a previous image frame. Therefore, a time interval between the drawing operation on the current image frame and the drawing operation on the previous image frame that are performed by the main application thread is excessively long. When the main application thread begins to draw the current image frame, a displacement interval between a displacement calculated based on a system time of drawing the current image frame and a displacement calculated from the previous image frame is excessively large, a deviation is generated between the displacement of the actually drawn current image frame and a theoretical displacement of a next image frame of the previous image frame, and displacement intervals between adjacent image frames are changing, thereby generating an effect of suddenly enlarging a picture when displaying the dynamic effect of starting, to cause visual stalling of the user. FIG. 3 shows a schematic diagram of a process of abnormally displaying a dynamic effect of starting of an application 5 by an electronic device being a mobile phone. In an example, in an abnormal case, because the main application thread draws the current image frame at an excessively long time interval, and a displacement interval of the current image frame calculated based on a system time of drawing is excessively large, to cause frame loss in the main application thread, the dynamic effect of starting includes three image frames. Referring to FIG. 3, in a scenario the same as that of starting the application 5 in FIG. 1, the main application thread of the electronic device shown in FIG. 3 does not draw and render the image frame shown in (d) of FIG. 1 and the image frame shown in (e) of FIG. 1, and after a specific time interval, the main application thread calculates a drawing displacement of the image frame shown in (f) of FIG. 3 based on a system moment. Therefore, a displacement interval between the displacement of the image frame shown in (f) of FIG. 3 and the displacement of the image frame shown in (c) of FIG. 3 is excessively large. Referring to (a) of FIG. 3, a user taps an icon of the application 5 on the display interface. In response to the tap operation of the user, the application 5 is started, a dynamic effect of starting is displayed, and displayed pictures in the dynamic effect of starting of the application 5 are gradually displayed from (b) of FIG. 3 to (f) of FIG. 3. Displacement intervals between adjacent image frames in the dynamic effect of starting of the application 5 from (c) of FIG. 3 to (f) of FIG. 3 are changing, and displayed pictures from (c) of FIG. 3 to (f) of FIG. 3 have a significant sudden enlargement change. As a result, the entire display process is not coherent, to cause visual stalling of the user.

The above scenario is a problem existing in a process of performing drawing, rendering, synthesis, and sending for display on image frames for the first type of dynamic effect. For the second type of dynamic effect, when the application process draws and renders an image frame, because the synthesis thread does not perform synthesis or for another reason, there is no free buffer object in the buffer queue, and the application process cannot perform drawing and rendering operations to cause frame loss. Once frame loss occurs in a process in which the application process draws and renders an image frame, it means that a situation such as stalling occurs in a displayed picture in a process of sending the image frame for display.

An embodiment of this application provides an image processing method, which may be applied to an electronic device with a display screen, includes image processing in processes of drawing, rendering, synthesis, and sending for display of image frames, and adapts to scenarios of processing image frames in all types of dynamic effects. Through the image processing method provided in this embodiment, the application process used for drawing and rendering image frames can obtain a free buffer object in each drawing period, and store a rendered image frame, to draw and render an image frame in a next drawing period. In an image processing scenario for the first type of dynamic effect, through the image processing method provided in this embodiment, the application process can avoid a problem that the application process does not perform drawing and rendering operations because there is no free buffer object in the buffer queue, thereby avoiding a problem that visual stalling occurs after sending for display because of an excessively large displacement interval between two adjacent image frames. In an image processing scenario for the second type of dynamic effect, through the image processing method provided in this embodiment, the application process can still avoid a problem that the application process does not perform drawing and rendering operations because there is no free buffer object in the buffer queue, thereby resolving a problem that stalling occurs in an image frame display process when frame loss occurs in the application process.

The electronic device in this embodiment of this application may be a portable computer (such as a mobile phone), a tablet computer, a notebook computer, a personal computer (personal computer, PC), a wearable electronic device (such as a smart watch), an augmented reality (augmented reality, AR)/virtual reality (virtual reality, VR) device, a vehicle-mounted computer, a smart television, or another device with a display screen. A specific form of the electronic device is not specially limited in the following embodiments.

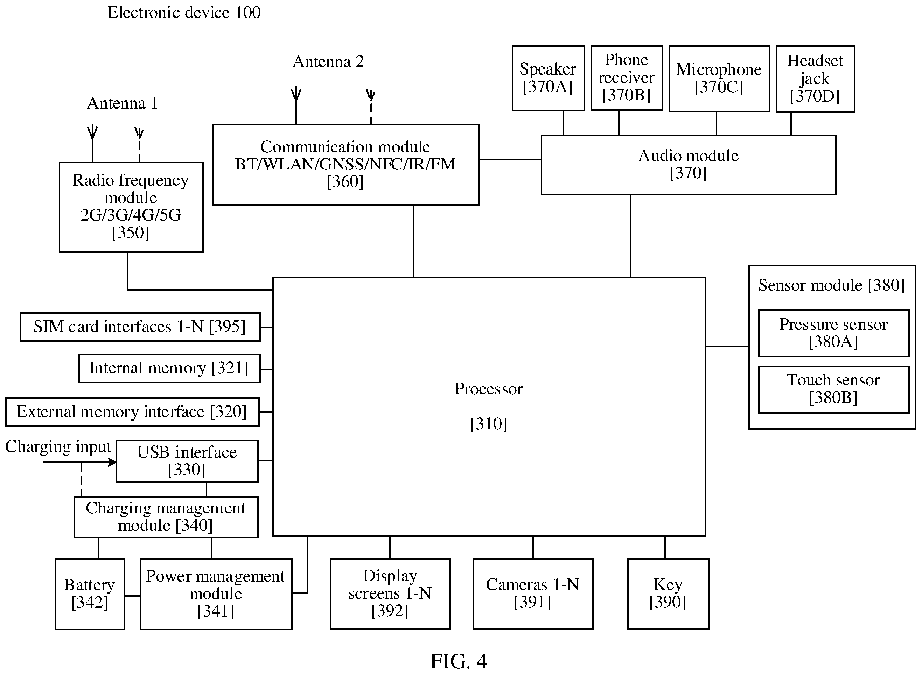

FIG. 4 is a block diagram of a structure of an electronic device (for example, an electronic device 100) according to an embodiment of this application. The electronic device 100 may include a processor 310, an external memory interface 320, an internal memory 321, a universal serial bus (universal serial bus, USB) interface 330, a charging management module 340, a power management module 341, a battery 342, an antenna 1, an antenna 2, a radio frequency module 350, a communication module 360, an audio module 370, a speaker 370A, a telephone receiver 370B, a microphone 370C, a headset jack 370D, a sensor module 380, a key 390, a camera 391, a display screen 392, and the like. The sensor module 380 may include a pressure sensor 380A, a touch sensor 380B, and the like.

The structure shown in this embodiment of the present invention does not constitute a limitation on the electronic device 100. The electronic device may include more or fewer components than those shown in the figure, or combine some components, or split some components, or have different component arrangements. The illustrated components may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors.

The controller may be a nerve center and a command center of the electronic device 100, and be a nerve center and a command center of the electronic device 100. The controller generates an operation control signal based on instruction operation code and a timing signal, to control instruction fetching and instruction execution.

A memory may also be arranged in the processor 310, and is configured to store instructions and data. In some embodiments, the memory in the processor 310 is a cache, and may store an instruction or data that is recently used or cyclically used by the processor 310. If the processor 310 needs to use the instructions or the data again, the instructions or the data may be invoked directly from the memory, to avoid repeated access and reduce a waiting time of the processor 310, thereby improving system efficiency.

In some embodiments, the processor 310 may include an interface. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, and/or a USB interface or the like.

An interface connection relationship between the modules shown in embodiments of the present invention is merely an example for description, and does not constitute a limitation on the structure of the electronic device 100. The electronic device 100 may adopt an interface connection manner different from that in this embodiment of the present invention, or adopt a combination of a plurality of interface connection manners.

The wireless communication function of the electronic device 100 can be implemented by using the antenna 1, the antenna 2, the radio frequency module 350, the communication module 360, the modem, the baseband processor, and the like.

The electronic device 100 implements a display function by using the GPU, the display screen 392, an application processor, and the like. The GPU is a microprocessor for image processing and is connected to the display screen 392 and the application processor AP. The GPU is configured to perform mathematical and geometric calculation for graphics rendering. The processor 310 may include one or more GPUs, and the GPU executes a program instruction to generate or change display information.

The display screen 392 is configured to display images, videos, and the like. The display screen 392 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flex light-emitting diode (flex light-emitting diode, FLED), a Miniled, a MicroLed, a Micro-oLed, a quantum dot light emitting diode (quantum dot light emitting diode, QLED), or the like. In some embodiments, the electronic device 100 may include one or N display screens 392, N being a positive integer greater than 1.

In this embodiment, the display screen may be any type of display screen, and may be a touch screen or a non-touch display screen. In this embodiment, the display screen 392 can display a dynamic effect triggered by an operation. For example, displaying a dynamic effect of starting of an application is triggered by tapping an application icon in the display screen. For example, displaying a dynamic effect of exiting of an application is triggered by tapping a control for exiting the application. For example, the display screen displays a dynamic effect of touch latency or a dynamic effect in a game scenario.

The electronic device 100 may implement a shooting function by using the ISP, the camera 391, the video codec, the GPU, the display screen, the application processor, and the like.

The external memory interface 320 may be configured to be connected to an external storage card, for example, a micro SD card, to expand a storage capability of the electronic device 100. The external memory card communicates with the processor 310 through the external memory interface 320, to implement a data storage function, for example, store files such as music and a video into the external memory card.

The internal storage 321 may be configured to store computer-executable program code, and the executable program code includes instructions. The processor 310 performs various function applications and data processing of the electronic device 100 by running the instructions stored in the internal memory 321. The memory 121 may include a program storage region and a data storage region. The program storage area may store an operating system, an application program required by at least one function (for example, a sound playback function and an image display function), and the like. The data storage area may store data (such as audio data or a phone book) created in a use process of the electronic device 100. In addition, the memory 121 may include a high-speed random access memory, and may alternatively include a nonvolatile memory, for example, at least one magnetic disk storage device, a flash memory device, another volatile solid-state memory, or a universal flash storage (universal flash storage, UFS).

The electronic device 100 may implement an audio function, for example, music playback or recording, by using the audio module 370, the speaker 370A, the phone receiver 370B, the microphone 370C, the headset jack 370D, the application processor, and the like.

The pressure sensor 380A is configured to sense a pressure signal and may convert the pressure signal into an electrical signal. In some embodiments, the pressure sensor 380A may be arranged in the display screen 392. There are various types of pressure sensors 380A, for example, a resistive pressure sensor, an inductive pressure sensor, and a capacitive pressure sensor. The capacitive pressure sensor may include at least two parallel plates made of conductive materials. When force is exerted on the pressure sensor, capacitance between electrodes changes. The electronic device 100 determines an intensity of the pressure based on the change in the capacitance. When a touch operation is performed on the display screen 392, the electronic device 100 detects strength of the touch operation by using the pressure sensor 380A. The electronic device 100 may further calculate a touch position based on a detection signal of the pressure sensor 380A.

The touch sensor 380B is also referred to as a "touch panel", and may be arranged in the display screen 392, is configured to detect a touch operation performed on or near the touch sensor, and may transmit the detected touch operation to the application processor, to determine a type of a touch event and provide a corresponding visual output by using the display screen 392.

The key 390 includes a power on/off key, a volume key, and the like. The key 390 may be a mechanical key, or a touch-type key. The electronic device 100 receives input of the button 390, and generates button signal input related to user setting and function control of the electronic device 100.

A software system of the electronic device 100 may use a layered architecture, an event-driven architecture, a micro core architecture, a micro service architecture, or a cloud architecture. In the embodiments of the present invention, an Android system of a layered architecture is used as an example to describe a software structure of the electronic device 100.

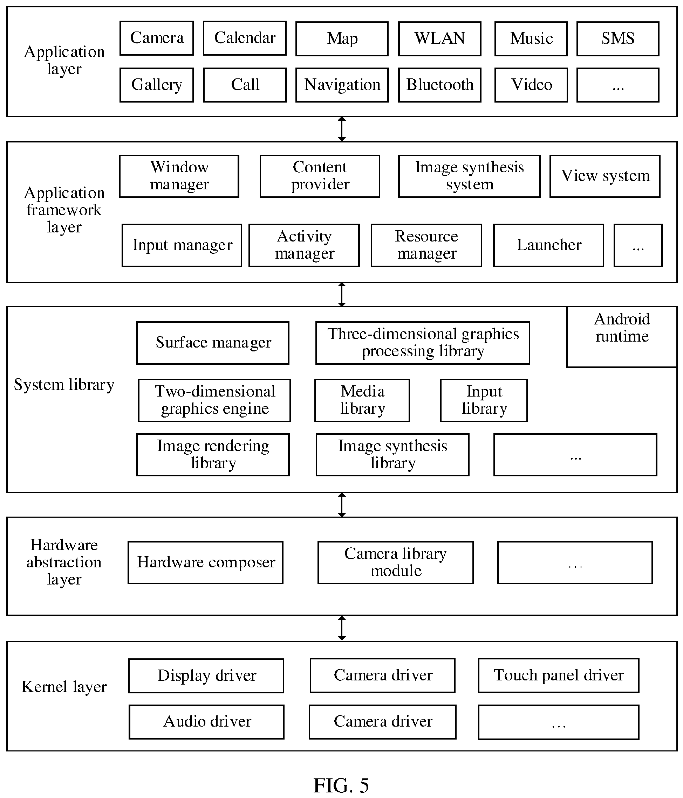

FIG. 5 is a block diagram of a software structure of an electronic device 100 according to an embodiment of the present invention. In a layered architecture, software is divided into several layers, and each layer has a clear role and task. The layers communicate with each other through a software interface. In some embodiments, the Android system is divided into four layers that are respectively an application layer, an application framework layer, an Android runtime and system library, a hardware abstraction layer, and a kernel layer from top to bottom.

The application layer may include a series of application program packages. As shown in FIG. 5, the application packages may include applications such as a camera, a gallery, a calendar, a phone, a map, navigation, a WLAN, Bluetooth, music, a video, and a short message.

Each application includes a main application thread and a rendering thread. The main application thread is used for drawing a corresponding image frame when a drawing signal arrives. The rendering thread is used for rendering the drawn image frame.

The application framework layer provides an application programming interface (application programming interface, API) and a programming framework for applications at the application layer. The application framework layer includes some predefined functions.

As shown in FIG. 5, the application framework layer may include a launcher (launcher), window manager, a content provider, an image synthesis system, a view system, an input manager, an activity manager, a resource manager, and the like.

In this embodiment, the launcher is configured to receive a first operation performed by a user on a touch screen of the electronic device, and start a first application in response to the first operation; and further configured to receive a second operation performed by the user on the touch screen of the electronic device, and exit the first application in response to the second operation. The first application may be any application included in the application layer.

The window manager is configured to manage a window program. The window manager may acquire a size of a display screen, determine whether there is a status bar, perform screen locking, take a screenshot of the screen, and the like.

The content provider is configured to store and obtain data, and enable the data to be accessible to an application. The data may include a video, an image, audio, calls made and answered, a browsing history and bookmarks, an address book, and like.

The image synthesis system is configured to control image synthesis and to generate a vertical synchronization (Vsync) signal. The image synthesis system may be a surface flinger (surface flinger).

The image synthesis system includes a synthesis thread and a Vsync thread. The synthesis thread is used for triggering, when a Vsync signal arrives, performing a synthesis operation on a plurality of layers of a rendered image frame. The Vsync thread is configured to request to generate a next Vsync signal based on the Vsync signal, and send the Vsync signal to another corresponding thread.

The view system includes visual controls such as a control for displaying text and a control for displaying a picture. The view system may be configured to construct an application. A display interface may include one or more views. For example, a display interface including a Messages notification icon may include a view for displaying text and a view for displaying a picture. A display interface may include one or more views.

The input manager is configured to manage an application of an input device. For example, an input system can determine input operations such as a mouse click operation, a keyboard input operation, and a touch sliding.

The activity manager is configured to manage a life cycle of each application and a navigation back function, and is responsible for creation of a main thread of Android, and maintenance of the life cycle of each application.

The resource manager provides various resources for an application, for example, a localized string, an icon, a picture, a layout file, and a video file.

The Android runtime includes a core library and a virtual machine. The Android runtime is responsible for scheduling and managing an Android system.

The core library includes two parts: one part is a performance function that the Java language needs to invoke, and the other part is a core library of Android.

The application layer and the application framework layer run in the virtual machine. The virtual machine executes java files at the application layer and the application framework layer as binary files. The virtual machine is configured to perform functions, such as object life cycle management, stack management, thread management, security and exception management, and garbage collection.

The system library may include a plurality of function modules, for example, an image rendering library, an image synthesis library, an input library, a surface manager (surface manager), a media library (media libraries), a three-dimensional graphics processing library (for example, openGL ES), and a 2D graphics engine (for example, SGL).

The image rendering library is configured to render a two-dimensional or three-dimensional image.

The image synthesis library is configured to synthesize a two-dimensional or three-dimensional image.

In a possible implementation, an application renders an image by using the image rendering library, and then the application transmits the image rendered to a buffer queue of the application, so that the image synthesis system sequentially obtains a frame of image to be synthesized from the buffer queue, and then synthesizes the image through the image synthesis library.

The input library is a library for processing input devices, and can process mouse, keyboard, touch, and other input.

The surface manager is configured to manage a display subsystem, and provide fusion of 2D and 3D layers to a plurality of application programs. The media library supports playing and recording in a plurality of common audio and video formats, a static image file, and the like.

The media library may support a plurality of audio and video coding formats, such as MPEG4, H.264, MP3, AAC, AMR, JPG, PNG, and the like.

The three-dimensional graphics processing library is configured to implement three-dimensional graphics drawing, image rendering and composition, layer processing, and the like. The 2D graphics engine is a drawing engine for 2D drawings.

The hardware abstraction layer may include a plurality of library modules, and the library modules may be a hardware composer (hwcomposer, HWC), a camera library module, and the like. The Android system can load corresponding library modules for device hardware, and then realize the purpose of accessing the device hardware by the application framework layer. The device hardware may include, for example, a display screen and a camera in the electronic device.

The HWC is an HAL layer module in Android for performing window synthesis and display. The image synthesis system provides a complete list of all windows to the HWC, to cause the HWC to determine, according to its hardware capabilities, how to process these windows. The HWC labels a synthesis manner of each window, for example, whether each window is synthesized through the GPU or through the HWC. The surface flinger is responsible for first synthesizing all windows labeled to be synthesized through the GPU to an output buffer, and then submitting this output buffer and other windows together to the HWC, to cause the HWC to complete synthesis and display of remaining windows.

The kernel layer is a layer between hardware and software. The kernel layer includes at least a touch panel (touch panel, TP) driver, a display driver, a camera driver, an audio driver, a camera driver, and the like.

The hardware may be an audio device, a Bluetooth device, a camera device, a sensor device, and the like.

Reference is made to the foregoing software structure of the electronic device provided in FIG. 5, to analyze a reason that visual stalling occurs at the time of displaying adjacent image frames in a dynamic effect because of frame loss in image frames in the dynamic effect or an excessively large drawing time interval and an excessively large displacement interval between adjacent frames in the dynamic effect in a process of displaying the dynamic effect in the existing technology.

For example, description is made using an example in which the electronic device displays a dynamic effect of starting of an application, which involves interaction between the application of the electronic device, the image synthesis system, and the display driver. The image synthesis system may be a surface flinger. An application process of each application includes a main application thread and a rendering thread. The surface flinger includes a synthesis thread and a Vsync thread. The Vsync thread generates a Vsync signal, and sends the Vsync signal to another corresponding thread, to awaken the another thread to perform a corresponding operation. For example, the user generates a touch operation for starting an application on the electronic device, the display driver of the electronic device sends an input event corresponding to the touch operation to an input thread of a system service, and the input thread sends the input event to the main application thread. After receiving the input event, the main application thread requests the Vsync signal from the synthesis thread to draw an image frame. When the Vsync signal arrives, the main application thread performs an operation such as drawing the current image frame in the dynamic effect of starting of the application, to obtain the drawn image frame. The rendering thread performs a rendering operation on the drawn image frame, to obtain a rendered image frame. When the Vsync signal arrives, the synthesis thread performs a synthesis operation on a plurality of layers of the rendered image frame, to obtain a synthesized image frame. Further, the synthesis thread is further responsible for sending the synthesized image frame to the HWC, and the HWC displays the image frame through the display driver.

Vsync signals generated by the Vsync thread include a Vsync_APP signal, a Vsync_SF signal, and an HW_Vsync signal. The Vsync thread generates a Vsync_APP signal and sends the Vsync _APP signal to the main application thread, and the main application thread performs a drawing operation on the current image frame when the Vsync_APP signal arrives. The Vsync thread generates a Vsync_SF signal and sends the Vsync_SF signal to the synthesis thread, and the synthesis thread acquires a rendered image frame and performs a synthesis operation on the image frame when the Vsync _SF signal arrives. The Vsync thread generates a HW_Vsync signal and sends the HW_Vsync signal to the display driver of the electronic device, and the display driver refreshes and displays an image frame when the HW_Vsync signal arrives.

A period in which the Vsync thread generates a Vsync signal is related to a frame rate of the electronic device. A frame rate refers to a frame number that refreshes the picture in 1 second, and may also be understood as a number of times a graphics processing unit refreshes the picture per second in the electronic device. A higher frame rate can result in a smoother and more realistic animation. More frames per second indicate a smoother displayed action. For example, a frame rate of 60 Hz means that 60 frames of pictures are refreshed in 1 second, that is, one frame picture is refreshed every 16.6 milliseconds. Correspondingly, the period in which the Vsync thread generates a Vsync signal is 16.6 milliseconds. For example, a frame rate of 90 Hz means that 90 frames of pictures are refreshed in 1 second, that is, one frame picture is refreshed every 11.1 milliseconds. Correspondingly, the period in which the Vsync thread generates a Vsync signal is 11.1 milliseconds.

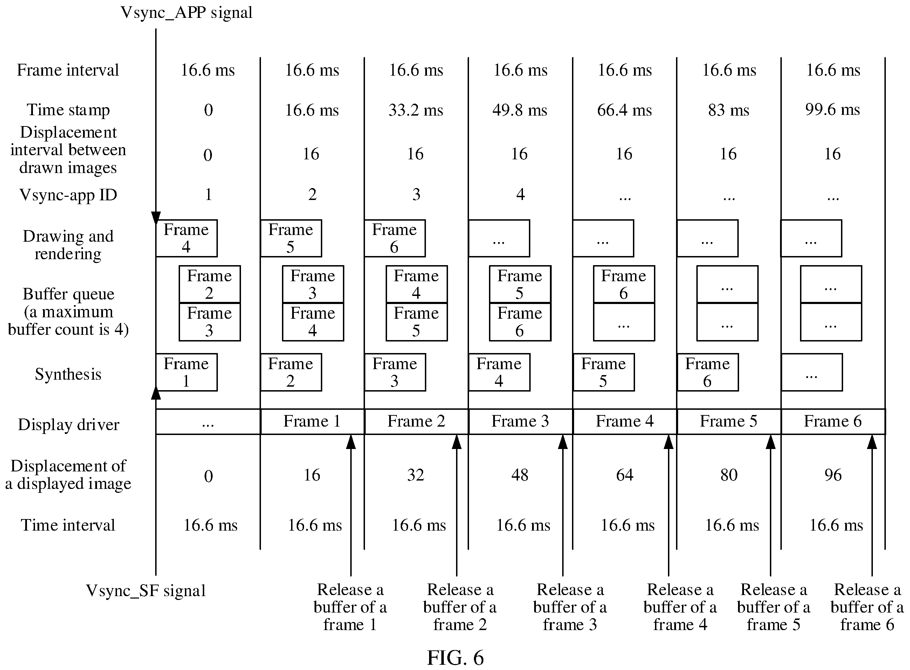

FIG. 6 provides a sequence diagram of processing operations of threads in an electronic device at a frame rate of 60 Hz. In a display scenario in which a frame rate is 60 Hz, a total frame number included in the dynamic effect is 6, a total distance of the dynamic effect is 96, and a total time of the dynamic effect is 99.6 ms. The Vsync thread generates a VSYNC_APP signal according to a period of 16.6 ms and sends the VSYNC_APP signal to the main application thread, to awaken the main application thread and the rendering thread to perform drawing and rendering operations. Normally, a time interval and a displacement interval at which the main application thread draws each image frame in the dynamic effect according to a signal period remain unchanged. In this embodiment, the drawing time interval is 16.6 ms, and the drawing displacement interval is 16.

In FIG. 6, a frame interval corresponds to a frame rate. When the frame rate is 60 Hz, the frame interval is 16.6 ms. A time stamp is used for recording a time at which the main application thread draws each image frame. A displacement interval and a frame interval at which images are drawn correspond to each other. When the frame interval is 16.6 ms, the displacement interval is 16. VSYNC_APP ID is a sequence number of a period in which the VSYNC_APP signal is received by the main application thread. Drawing and rendering mean that the main application thread and the rendering thread perform drawing and rendering operations. The buffer queue in FIG. 6 is used for storing rendered image frames. The rendering thread can store the rendered image frames into free buffers in the buffer queue; and the synthesis thread can acquire the rendered image frames from the buffer queue for synthesis. To be specific, the rendering thread is a producer in the buffer queue, and the synthesis thread is a consumer in the buffer queue. The buffer queue has a maximum buffer count. In the example of FIG. 6, the maximum buffer count of the buffer queue is 4. The synthesis thread in the drawing means that the synthesis thread performs a synthesis operation. Display means that the display driver performs image frame display. FIG. 6 further includes displacements of displayed image frames, and a time interval between adjacent displayed image frames.

The electronic device can create a buffer queue (the buffer queue), a producer in the buffer queue is the rendering thread, and a consumer is the synthesis thread. The buffer queue may include a plurality of buffers (buffers). In an initial state in the buffer queue, each buffer is a free buffer (free buffer), and the free buffer is a buffer not occupied by the rendering thread or the synthesis thread. Generally, a maximum buffer count (MaxBufferCount) in the buffer queue is determined according to a frame rate of the electronic device. For example, when the frame rate of the electronic device is 60 Hz, MaxBufferCount of the buffer queue may be 10. MaxBufferCount of the buffer queue is an empirical value.

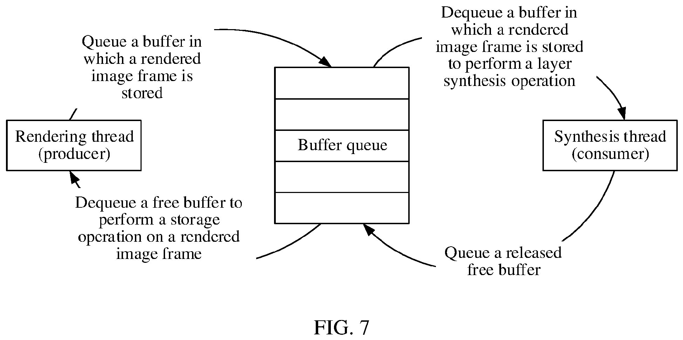

With reference to the producer and the consumer in the buffer queue, a use mechanism of buffers in the buffer queue is briefly described. Reference may be made to FIG. 7. The rendering thread is a producer in the buffer queue, and the synthesis thread is a consumer in the buffer queue. A process of performing drawing, rendering, synthesis, and display on image frames includes:

(1) When the VSYNC_APP signal arrives, the main application thread performs a drawing operation on the current image frame, to obtain the drawn image frame.

The rendering thread performs a rendering operation on the drawn image frame, and dequeues (dequeues), from the buffer queue when the buffer queue has free buffers (free buffers), a free buffer (free buffer) for storing the rendered image frame. In this case, the state of the buffer is updated to dequeued (dequeued), indicating that the buffer is in a state of being acquired by the rendering thread and being subjected to a corresponding operation.

A process of dequeuing a buffer includes: The rendering thread sends a request for dequeuing a free buffer to the main application thread, and the main application thread determines whether a count of buffers in a dequeued state in the buffer queue has reached a maximum dequeueable count. If the count of the buffers in the dequeued state is less than the maximum dequeueable count, it indicates that a free buffer still exists in the current buffer queue. In this case, the main application thread searches for a free buffer according to a sequence of free buffers, and labels the state of the buffer as a dequeued state. After the state of the buffer is labeled, buffer information of the buffer is returned to the rendering thread, and the rendering thread performs a storage operation on the rendered image frame based on the buffer information. The buffer information includes a buffer address, a buffer state identifier, and the like.

(2) After completing the storage operation on the rendered image frame, the rendering thread queues (queues) a buffer in which the rendered image frame is stored into the buffer queue. In this case, the state of the buffer is updated to queued (queued), indicating that the buffer is in a state of waiting to be synthesized.

A process of queuing a buffer includes: The rendering thread sends a request for queuing a buffer to the main application thread, where the request carries buffer information of the buffer. The main application thread updates the state of the buffer to queued according to the buffer information.

(3) When a Vsync_SF signal arrives, the synthesis thread acquires (acquires) a buffer in which the rendered image frame is stored from the buffer queue, and performs a synthesis operation on layers of the image frame. In this case, the state of the buffer is updated to acquired (acquired), indicating that the buffer is in a state of being acquired by the synthesis thread for synthesis.

A process of acquiring a buffer includes: The synthesis thread sends a request for acquiring a buffer to the main application thread, and the main application thread determines whether a count of buffers in an acquired state in the buffer queue is greater than or equal to a maximum synthesizable count. If the count of the buffers in the acquired state in the current buffer queue is less than the maximum synthesizable count, the main application thread sends buffer information of the first queued buffer to the synthesis thread according to a sequence of queued buffers, and labels the buffer as the acquired state. The synthesis thread performs a synthesis operation on the rendered image in the buffer based on the buffer information.

(4) After completing the synthesis operation on the image frame, the synthesis thread can send the synthesized image frame to the HWC and the display driver for display, and the display driver releases the buffer after sending and display of the synthesized image frame are completed. In this case, the state of the buffer is updated to free (free).

A process of releasing a buffer includes: The display driver releases (releases), in a current display period, a buffer occupied by a synthesized image frame displayed in a previous display period, and returns buffer information of the buffer to the synthesis thread, and the synthesis thread returns the buffer information of the buffer to the main application thread. The main application thread updates the state of the buffer to free according to the buffer information.

Optionally, the main application thread may further notify the rendering thread that a free buffer exists in the buffer queue, so that the rendering thread acquires the free buffer in a current drawing and rendering period or a next drawing and rendering period and performs a storage operation on the rendered image frame.

It should be noted that each buffer queue involved in this embodiment is a buffer queue stored in an application. The main application thread is responsible for information acquiring and state update of each buffer in the buffer queue. The rendering thread needs to interact with the main application thread to implement operations of dequeuing a buffer and queuing a buffer; and the synthesis thread needs to interact with the main application thread to implement operations of acquiring a buffer and releasing a buffer.

Based on the foregoing use mechanism of buffers in the buffer queue, a sequence diagram of processing operations of the main application thread, the rendering thread, the synthesis thread, and the display driver shown in FIG. 6 is described. MaxBufferCount of a buffer sequence in FIG. 6 is 4.

1. In a period in which a Vsync-APP ID is 1, when a Vsync_APP signal arrives, the main application thread draws an image frame 4, and an initial displacement of the first image frame 4 is 0 by default. After obtaining the drawn image frame 4, the rendering thread renders the drawn image frame 4, and interacts with the main application thread, to acquire, from the buffer queue, a free buffer for storing the rendered image frame 4, and the main application thread updates the state of the buffer in which the rendered image frame 4 is stored to dequeued.

When a Vsync _SF signal arrives, the synthesis thread determines to perform a synthesis operation. The synthesis thread interacts with the main application thread, to acquire the rendered image frame 1 for synthesis from the buffer queue, and the main application thread updates the state of the buffer occupied by the image frame 1 to acquired. The buffer queue further includes a buffer in which the rendered image frame 2 is stored and a buffer in which the rendered image frame 3 is stored, and states corresponding to the buffers are both queued. In this case, there is no free buffer in the buffer queue.

2. In a period in which a Vsync-APP ID is 2, the synthesis thread completes a synthesis operation on the rendered image frame 1, and sends the synthesized image frame 1 to the HWC for sending and display. The HWC displays the synthesized image frame 1 through the display driver. In addition, before the current period ends, a buffer occupied by the synthesized image frame 1 is released, buffer information of the buffer is returned to the synthesis thread, the synthesis thread returns the buffer information of the buffer to the main application thread, and the main application thread updates the state of the buffer according to the buffer information. In this case, there is one free buffer in the buffer queue.

when a Vsync_APP signal arrives, the main application thread draws an image frame 5. Through calculation, the displacement of the image frame 5 is 16, and the displacement interval between the image frame 5 and the image frame 4 is 16. After obtaining the drawn image frame 5, the rendering thread renders the drawn image frame 5, and interacts with the main application thread, to acquire, from the buffer queue, a free buffer for storing the rendered image frame 5, and the main application thread updates the state of the buffer in which the rendered image frame 5 is stored to dequeued.

When a Vsync _SF signal arrives, the synthesis thread determines to perform a synthesis operation. The synthesis thread interacts with the main application thread, to acquire the rendered image frame 2 from the buffer queue to perform a synthesis operation, and the main application thread updates the state of the buffer occupied by the image frame 2 to acquired. The buffer queue further includes a buffer in which the rendered image frame 3 is stored and a buffer in which the rendered image frame 4 is stored, and states corresponding to the buffers are both queued. The buffer queue further includes a buffer that is being used for storing the rendered image frame 5, and a state corresponding to the buffer is dequeued. In this case, there is no free buffer in the buffer queue.

3. In a period in which a Vsync-APP ID is 3, the synthesis thread completes a synthesis operation on the rendered image frame 2, and sends the synthesized image frame 2 to the HWC for sending and display. The HWC displays the synthesized image frame 2 through the display driver. In addition, before the current period ends, a buffer occupied by the synthesized image frame 2 is released, buffer information of the buffer is returned to the synthesis thread, the synthesis thread returns the buffer information of the buffer to the main application thread, and the main application thread updates the state of the buffer according to the buffer information. In this case, there is one free buffer in the buffer queue.

when a Vsync_APP signal arrives, the main application thread draws an image frame 6. Through calculation, the displacement of the image frame 6 is 32, and the displacement interval between the image frame 6 and the image frame 5 is 16. After obtaining the drawn image frame 6, the rendering thread renders the drawn image frame 6, and interacts with the main application thread, to acquire, from the buffer queue, a free buffer for storing the rendered image frame 6, and the main application thread updates the state of the buffer in which the rendered image frame 6 is stored to dequeued.

When a Vsync _SF signal arrives, the synthesis thread determines to perform a synthesis operation. The synthesis thread interacts with the main application thread, to acquire the rendered image frame 3 from the buffer queue to perform a synthesis operation, and the main application thread updates the state of the buffer occupied by the image frame 3 to acquired. The buffer queue further includes a buffer in which the rendered image frame 4 is stored and a buffer in which the rendered image frame 5 is stored, and states corresponding to the buffers are both queued. The buffer queue further includes a buffer that is being used for storing the rendered image frame 6, and a state corresponding to the buffer is dequeued. In this case, there is no free buffer in the buffer queue.

Operations performed by the rendering thread and the synthesis thread in the following periods are similar to those in the three previous periods. The synthesis thread normally performs a synthesis operation in each period and sends a synthesized image frame for display in a next period of the synthesized image frame. The display driver releases a buffer of the synthesize image frame before the current display period ends and returns buffer information of the released buffer to the synthesis thread, the synthesis thread sends the buffer information to the main application thread, and the main application thread updates the state of the buffer according to the buffer information. In addition, the main application thread notifies the rendering thread that free buffers exist in the buffer queue, so that the rendering thread can acquire the last free buffer from the buffer queue in each period to store a next image frame that is drawn and rendered. A calculated displacement interval between an image frame drawn by the main application thread in each period and a previous image frame remains unchanged and is 16. Therefore, correspondingly, a displacement interval between adjacent synthesized image frames obtained through rendering, synthesis, and sending for display also remains unchanged and is 16, thereby coherently displaying a plurality of consecutive frames in the display process.

However, in an actual process, for different reasons, the rendering thread cannot acquire a free buffer to store a rendered image, the rendering thread and the main application thread are serial threads, if the rendering thread performs no rendering operation, drawing, by the main application thread, a next image frame is affected. In this way, an interval between the time at which the main application thread draws the previous image frame and the time at which the main application thread draws the current image frame is excessively large, and consequently an interval between a displacement of the current image frame and a displacement of the previous image frame that are calculated by the main application thread is excessively large After adjacent image frames with an excessively large displacement interval undergo rendering, synthesis, and sending for display operations, a visual stalling phenomenon occurs in the display process because of the excessively large displacement interval between the adjacent image frames.

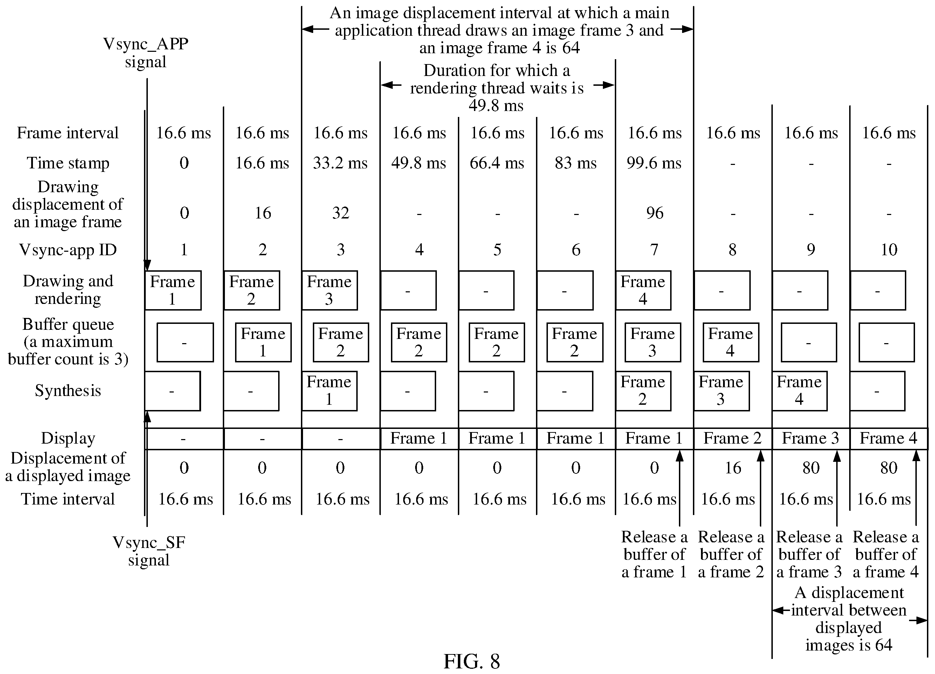

FIG. 8 provides an example in which because the synthesis thread performs no synthesis operation on an image frame in time in a corresponding period, the rendering thread cannot acquire a free buffer from the buffer queue to store a rendered image frame, and then calculation and drawing of the main application thread on a next image frame are affected, thereby causing an excessively large displacement interval between adjacent frames. Referring to FIG. 8, maxbuffercount of a buffer sequence is 3.

1. In a period in which a Vsync_APP ID is 1, when a Vsync_APP signal arrives, the main application thread calculates a displacement of a drawn image frame 1 according to a time stamp and a total displacement distance. At 16.6 ms, the displacement of the drawn image frame 1 is 0. After obtaining the drawn image frame 1, the main application thread awakens the rendering thread to render the image frame 1. The rendering thread interacts with the main application thread, to acquire, from the buffer queue, a free buffer for storing the rendered image frame 1, and the main application thread updates the state of the buffer in which the rendered image frame 1 is being stored to dequeued.

When a Vsync _SF signal arrives, the synthesis thread determines to perform no synthesis operation. In this case, the buffer queue includes one dequeued buffer and two free buffers.

2. In a period in which a Vsync_APP ID is 2, the rendering thread completes an operation of storing the rendered image frame 1 into a buffer, the rendering thread interacts with the main application thread, to queue the buffer in which the rendered image frame is stored into the buffer queue, and the main application thread updated the state of the buffer to queued. In this case, the buffer queue includes one queued buffer and two free buffers.

When a Vsync_APP signal arrives, the main application thread calculates a displacement of a drawn image frame 2 according to a time stamp and a total displacement distance, where the displacement interval is 16, and the time interval is 16.6 ms. At 33.2 ms, the calculated displacement of the image frame 2 is 16. After obtaining the drawn image frame 2, the main application thread awakens the rendering thread to render the image frame 2. The rendering thread interacts with the main application thread, to acquire, from the buffer queue, a free buffer for storing the rendered image frame 2, and the main application thread updates the state of the buffer in which the rendered image frame 2 is being stored to dequeued.

When a Vsync _SF signal arrives, the synthesis thread determines to perform no synthesis operation. In this case, the buffer queue includes one queued buffer, one dequeued buffer, and one free buffer.

3. In a period in which a Vsync_APP ID is 3, the rendering thread completes an operation of storing the rendered image frame 2 into a buffer, the rendering thread interacts with the main application thread, to queue the buffer in which the rendered image frame is stored into the buffer queue, and the main application thread updated the state of the buffer to queued. In this case, the buffer queue includes two queued buffers and one free buffer.

When a Vsync_APP signal arrives, the main application thread calculates a displacement of a drawn image frame 3 according to a time stamp and a total displacement distance, where the displacement interval is 16, and the time interval is 16.6 ms. At 49.8 ms, the calculated displacement of the image frame 3 is 32. After obtaining the drawn image frame 3, the main application thread awakens the rendering thread to render the image frame 3. The rendering thread interacts with the main application thread, to acquire, from the buffer queue, a free buffer for storing the rendered image frame 3, and the main application thread updates the state of the buffer in which the rendered image frame 3 is being stored to dequeued.

When a Vsync _SF signal arrives, the synthesis thread determines to perform a synthesis operation. The synthesis thread interacts with the main application thread, to acquire a queued buffer from the buffer queue and perform a synthesis operation, the main application thread returns buffer information corresponding to the rendered image frame 1 to the synthesis thread according to a buffer sequence, and the synthesis thread performs a synthesis operation on the rendered image frame 1 according to the buffer information.

In this case, the buffer queue includes one acquired buffer, one queued buffer, and one dequeued buffer.

4. In a period in which a Vsync-APP ID is 4, when a Vsync_APP signal arrives, because there is no free buffer in the buffer queue, the rendering thread cannot acquire a free buffer from the buffer queue to store the rendered image frame, the rendering thread performs no rendering operation, and the main application thread performs no drawing operation.

When a Vsync _SF signal arrives, the synthesis thread determines to perform no synthesis operation.

The display driver displays the received synthesized image frame 1.

5. In a period in which a Vsync-APP ID is 5, When a Vsync_SF signal arrives, the synthesis thread determines to perform no synthesis operation. Because there is no new image to be sent for display, the display driver still displays the synthesized image frame 1.

There is still no free buffer in the buffer queue, and therefore the main application thread and the rendering thread do not perform drawing and rendering operations in the period.

6. In a period in which a Vsync-APP ID is 6, When a Vsync_SF signal arrives, the synthesis thread determines to perform no synthesis operation. Because there is no new image to be sent for display, the display driver still displays the synthesized image frame 1.

There is still no free buffer in the buffer queue, and therefore the main application thread and the rendering thread do not perform drawing and rendering operations in the period.

7. In a period in which a Vsync-APP ID is 7, When a Vsync_SF signal arrives, the synthesis thread determines to perform a synthesis operation. The synthesis thread interacts with the main application thread, to acquire the rendered image frame 2 from the buffer queue to perform a synthesis operation. Because there is no new image to be sent for display in the current period, the display driver still displays the synthesized image frame 1.

Before display in this period ends, the display driver releases a buffer occupied by the synthesized image frame 1 and returns buffer information of the buffer to the synthesis thread, the synthesis thread returns the buffer information to the main application thread, and the main application thread updates the state of the buffer according to the buffer information, to update the state of the buffer to free.

In this case, the buffer queue includes one acquired buffer, one queued buffer, and one free buffer. when a Vsync_APP signal arrives, the main application thread calculates a displacement of a drawn image frame 4 according to a time stamp and a total displacement distance. In this case, three periods of drawing and rendering have passed, the current period is the fourth period, and the time interval is 16.6 ms* (1+3) =66.4 ms. Therefore, the calculated displacement interval should be 16* (1+3) =64, so that the displacement of the finally drawn image is 32+16*4=96, and the displacement of the image frame 4 is 96. After obtaining the drawn image frame 4, the main application thread awakens the rendering thread to render the image frame 4. The rendering thread interacts with the main application thread, to acquire, from the buffer queue, a last free buffer for storing the rendered image frame 4, and the main application thread updates the state of the buffer in which the rendered image frame 4 is being stored to dequeued.

In this case, the buffer queue includes one acquired buffer, one queued buffer, and one dequeued buffer.

8. In a period in which a Vsync-APP ID is 8, there is no free buffer in the buffer queue, and therefore the main application thread and the rendering thread do not perform drawing and rendering operations.

When a Vsync _SF signal arrives, the synthesis thread determines to perform a synthesis operation. The synthesis thread interacts with the main application thread, to acquire the rendered image frame 3 for synthesis from the buffer queue.

In this period, the synthesis thread sends the synthesized image frame 2 for display, and The display driver displays the received synthesized image frame 2.

Before display in this period ends, the display driver releases a buffer occupied by the synthesized image frame 2 and returns buffer information of the buffer to the synthesis thread, the synthesis thread returns the buffer information to the main application thread, and the main application thread updates the state of the buffer according to the buffer information.

In this case, the buffer queue includes one free buffer, one acquired buffer, and one queued buffer.

Because a time stamp in the current period has exceeded the total time of the dynamic effect, and it is considered that the dynamic effect has been drawn completely, the main application thread and the rendering thread do not perform drawing and rendering operations.

9. In a period in which a Vsync-APP ID is 9, When a Vsync_SF signal arrives, the synthesis thread determines to perform a synthesis operation. The synthesis thread interacts with the main application thread, to acquire the image frame 4 for synthesis from the buffer queue. The synthesized image frame 3 is sent for display, and The display driver displays the received synthesized image frame 3. Before the period of displaying the image frame 3 ends, the display driver releases a buffer occupied by the synthesized image frame 3 and returns buffer information of the buffer to the synthesis thread, the synthesis thread returns the buffer information to the main application thread, and the main application thread updates the state of the buffer according to the buffer information. Because a start time stamp in the current period has exceeded the total time of the dynamic effect, the main application thread and the rendering thread do not perform drawing and rendering operations.

10. In a period in which a Vsync-APP ID is 10, the synthesized image frame 4 is sent for display, and The display driver displays the received synthesized image frame 4. Before the period of displaying the image frame 4 ends, the display driver releases a buffer occupied by the synthesized image frame 4 and returns buffer information of the buffer to the synthesis thread, the synthesis thread returns the buffer information to the main application thread, and the main application thread updates the state of the buffer according to the buffer information. Because a start time stamp in the current period has exceeded the total time of the dynamic effect, the main application thread and the rendering thread do not perform drawing and rendering operations.

Through the foregoing steps 1 to 10, it can be seen that in each of the periods in which the Vsync-APP IDs are 4, 5, and 6, because the synthesis thread performs no synthesis operation, and no corresponding buffer is released, the rendering thread cannot acquire a free buffer from the buffer queue in the period in which the Vsync-APP ID is 4 to store the rendered image frame 4, and consequently the main application thread cannot calculate or draw the image frame 4. Normally, the main application thread draws the image frame 4 in the period in which the Vsync-APP ID is 4, and an obtained displacement interval between the image frame 4 and the image frame 5 should be 16. However, in this example of FIG. 6, only when the buffer of the image frame 1 is released before the period in which the Vsync-APP ID is 7 ends, the main application thread updates the state of the released buffer in the period in which the Vsync-APP ID is 7, thereby awakening the rendering thread to acquire a free buffer to draw the image frame 4. In this case, the calculated displacement of the image frame 4 is 96, and the displacement interval between the image frame 4 and the image frame 3 is 64 and is different from the displacement interval 16 during normal drawing.

When this displacement interval is changing and a displacement interval between adjacent frames is large, in a process in which the display driver displays the image frame 4 and the image frame 3, because the displacement interval between the image frame 4 and the image frame 3 is excessively large, a problem of an incoherent displacement change between adjacent image frames is generated, and visually evident stalling occurs when the dynamic effect is displayed.

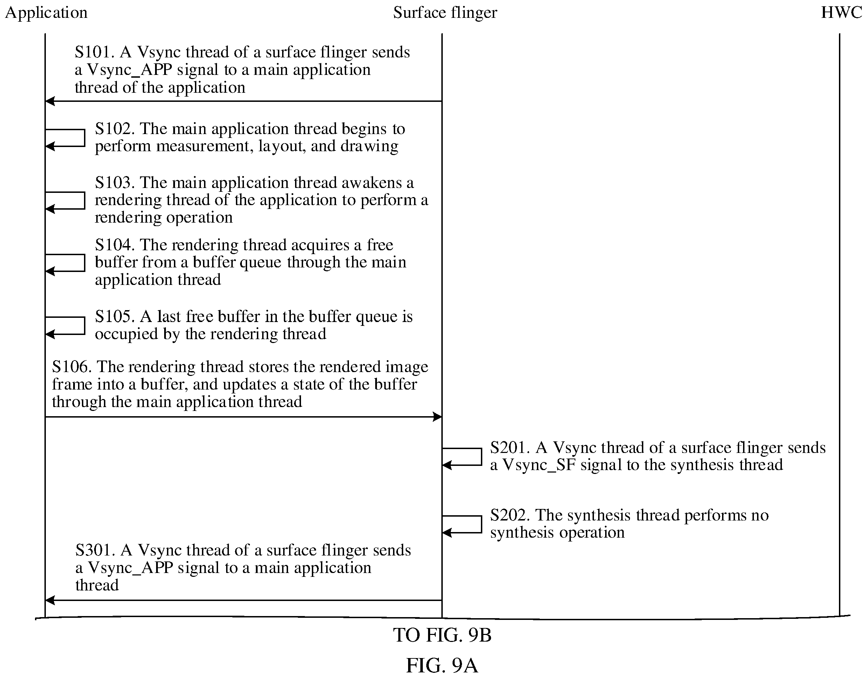

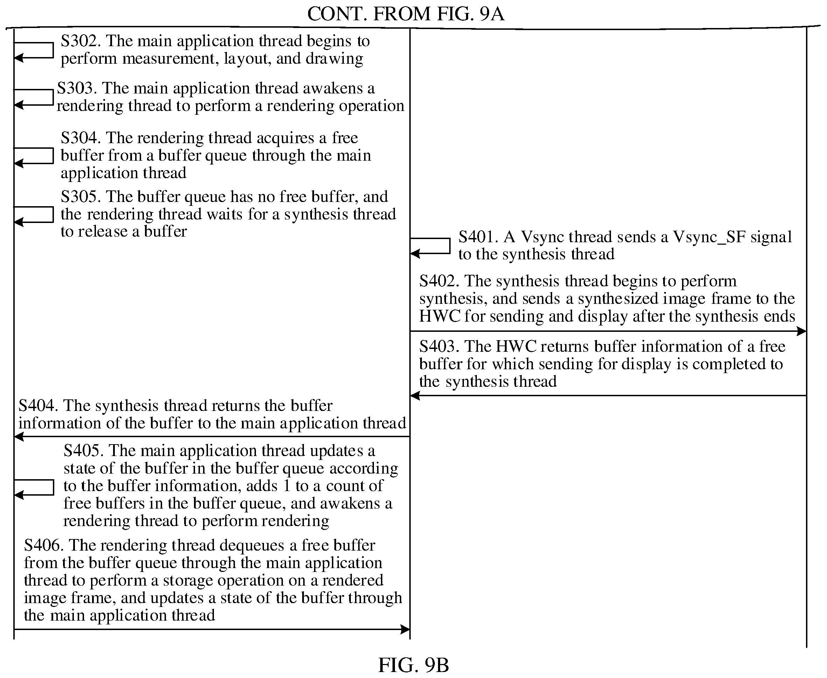

To understand the problem in the existing technology more clearly, an example is provided with reference to the perspective of interaction among an application, a surface flinger, and an HWC based on a process from drawing and rendering of image frames in a dynamic effect to synthesis of the image frames. Reference may be made to FIG. 9A and FIG. 9B. The following several stages are included:

Stage 1: Stage of triggering an application to perform drawing and rendering:

S101. A Vsync thread of a surface flinger sends a Vsync_APP signal to a main application thread of the application.

The Vsync thread for the synthesis thread generates the Vsync_APP signal and sends the Vsync_APP signal to the main application thread of the application, and the main application thread begins to perform operations such as drawing and rendering on the current image frame after the Vsync_APP signal arrives.

S102. The main application thread begins to perform measurement, layout, and drawing.

The main application thread can acquire a system time of drawing the current image frame, and perform displacement measurement and calculation, layout, and drawing on the current frame of image based on a dynamic effect curve and the system time, thereby obtaining the drawn image frame. For example, the image frame may be an image frame 1.

S103. The main application thread awakens a rendering thread of the application to perform a rendering operation.

The main application thread awakens the rendering thread to perform a rendering operation on the drawn image frame 1.

S104. The rendering thread dequeues a free buffer from a buffer queue through the main application thread.

After completing the rendering operation on the image frame 1, the rendering thread requests to dequeue a free buffer from the buffer queue through the main application thread to store the rendered image frame 1.

S105. A last free buffer in the buffer queue is occupied by the rendering thread.

The rendering thread acquires the last free buffer, and stores the rendered image frame 1 into the buffer.

S106. The rendering thread stores the rendered image frame into a buffer, and updates a state of the buffer through the main application thread.

The rendering thread queues the buffer in which the rendered image frame 1 is stored into the buffer queue through the main application thread, and the main application thread updates the state of the buffer, so that the synthesis thread can acquire the rendered image frame from the buffer queue in a synthesis period to perform a synthesis operation.

Stage 2: Stage in which a synthesis thread performs no synthesis:

S201. A Vsync thread of a surface flinger sends a Vsync_SF signal to the synthesis thread.

The Vsync thread generates the Vsync_SF signal and sends the Vsync_SF signal to the synthesis thread, and the synthesis thread determines whether to perform a synthesis operation on an image frame after the Vsync_SF signal arrives.

S202. The synthesis thread performs no synthesis operation.

The synthesis thread determines to perform no synthesis operation. For example, cases that the synthesis thread determines to perform no synthesis operation include: performance of the synthesis thread itself is abnormal to cause an excessively long running time of the synthesis thread, miss a sending and display signal, and cause frame loss; or an excessively large interval between two adjacent image frames is caused because of frame cutting, and the synthesis thread cannot wait for a sending and display signal to arrive, and performs no synthesis based on a back pressure mechanism.

A consequence caused because the synthesis thread performs no synthesis operation is that the buffer in the buffer queue of the application in which the rendered image frame is stored cannot wait until being consumed by the synthesis thread. If the synthesis thread does not synthesize an image frame in the buffer queue, a subsequent process of sending for display and releasing a buffer is not performed. Therefore, a count of free buffers in the buffer queue is always reduced, until there is no free buffer in the buffer queue, and then the rendering thread cannot acquire a free buffer to store a rendered image frame.

Stage 3: Stage in which the application triggers drawing and rendering:

S301. A Vsync thread of a surface flinger sends a Vsync_APP signal to a main application thread.

The Vsync thread generates the Vsync_APP signal and sends the Vsync_APP signal to the main application thread, and the main application thread begins to perform drawing and rendering operations on the current image frame after the Vsync_APP signal arrives.

S302. The main application thread begins to perform measurement, layout, and drawing.

The main application thread can acquire a system time of drawing the current image frame, and perform displacement measurement and calculation, layout, and drawing on the current frame of image based on a dynamic effect curve and the system time, thereby obtaining the drawn image frame. For example, the image frame may be an image frame 2.

S303. The main application thread awakens a rendering thread to perform a rendering operation.

The main application thread awakens the rendering thread to perform a rendering operation on the drawn image frame 2.

S304. The rendering thread acquires a free buffer from a buffer queue through the main application thread.

After completing the rendering operation on the image frame 1, the rendering thread requests to dequeue a free buffer from the buffer queue through the main application thread to store the rendered image frame 2.

S305. The buffer queue has no free buffer, and the rendering thread waits for a synthesis thread to release a buffer.

The synthesis thread performs no synthesis operation in S202, the buffer in the buffer queue in which a rendered image frame is stored is not consumed, and no buffer is released. Therefore, after a last free buffer in the buffer queue is used in S105, the buffer queue has no free buffer. The rendering thread acquires no free buffer, and is in a waiting stage.

Stage 4: Stage in which a synthesis thread performs synthesis and interacts with an HWC and an application:
S401. A Vsync thread sends a Vsync_SF signal to the synthesis thread.

The Vsync thread generates the Vsync_SF signal and sends the Vsync_SF signal to the synthesis thread, and the synthesis thread determines whether to perform a synthesis operation after the Vsync-SF signal arrives.

S402. The synthesis thread begins to perform synthesis, and sends a synthesized image frame to the HWC for sending and display after the synthesis ends.

The synthesis thread determines to perform a synthesis operation, acquires a rendered image frame 1 from a buffer queue through a main application thread to perform a synthesis operation, and sends the synthesized image frame 1 to the HWC for display.

S403. The HWC returns buffer information of a free buffer for which sending for display is completed to the synthesis thread.

After displaying the synthesized image frame 1, the HWC releases a buffer of the synthesized image frame 1 in a next display period and returns buffer information of the buffer to the synthesis thread.

S404. The synthesis thread returns the buffer information of the buffer to the main application thread.

After obtaining the buffer information of the buffer, the synthesis thread returns the buffer information of the buffer to the main application thread.

S405. The main application thread updates a state of the buffer in the buffer queue according to the buffer information, adds 1 to a count of free buffers in the buffer queue, and awakens a rendering thread to perform rendering.

After obtaining the buffer information, the main application thread adds 1 to the count of the free buffers in the buffer queue according to the buffer information, and awakens the rendering thread waiting for a free buffer to perform a rendering operation.

S406. The rendering thread dequeues a free buffer from the buffer queue through the main application thread to perform a storage operation on a rendered image frame, and updates a state of the buffer through the main application thread.

After obtaining an awakening message of the main application thread, the rendering thread dequeues a free buffer from the buffer queue through the main application thread to store a rendered image frame 2, and updates a state of the buffer through the main application thread.

Evidently, in the foregoing process, because the rendering thread of the application cannot acquire a free buffer from the buffer queue in time, the rendering thread is always in a waiting state (S305), and the rendering thread performs no rendering operation, which affects a drawing operation of the main application thread, thereby causing a problem of an excessively large displacement interval at which the main application thread draws adjacent image frames.

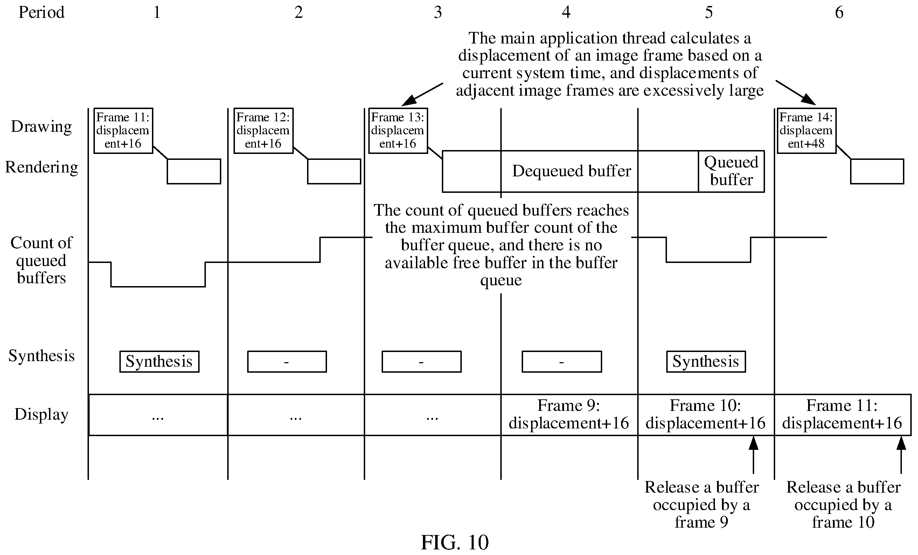

Optionally, FIG. 10 provides a sequence diagram of changes of MaxBufferCount of a buffer queue in a process of drawing, rendering, synthesizing, and displaying an image frame. Referring to FIG. 10, a period in which a frame 11 is located is the first period. In this example, MaxBufferCount of the buffer queue is 4.

In the first period, a count of queued buffers in the buffer queue is 2, and the buffer queue includes 2 free buffers and 2 queued buffers. The main application thread draws the image frame 11, and a displacement interval of the image frame 11 calculated by the main application thread is 16. After completing the drawing on the image frame 11, the main application thread awakens the rendering thread to render the image frame 11. After completing the rendering on the image frame 11, the rendering thread dequeues a free buffer from the buffer queue through the main application thread to store the rendered image frame 11. In this case, in the buffer queue, a count of queued buffers is increased by 1, and a count of free buffers is reduced by 1.

In this period, the synthesis thread interacts with the main application thread, to acquire a queued buffer from the buffer queue and perform a synthesis operation, and the synthesis thread acquires an image frame 10 according to a sequence of image frames and performs a synthesis operation.

In the second period, a count of queued buffers in the buffer queue is 3, and the buffer queue includes 1 free buffers and 3 queued buffers. The main application thread draws the image frame 12, and a displacement interval of the image frame 12 calculated by the main application thread is 16. After completing the drawing on the image frame 12, the main application thread awakens the rendering thread to render the image frame 12. After completing the rendering on the image frame 12, the rendering thread dequeues a last free buffer from the buffer queue through the main application thread to store the rendered image frame 12. In this case, in the buffer queue, a count of queued buffers is increased by 1, and a count of free buffers is reduced by 1.

In this period, the synthesis thread performs no synthesis.

In the third period, all buffers in the buffer queue are occupied, a count of queued buffers reaches a maximum, and the count is the same as the count of MaxBufferCount and is 4. No free buffer in the buffer queue can be used by the rendering thread. After the main application thread completes drawing of an image frame 13 based on a displacement interval 16 of the image frame 13, the rendering thread cannot acquire a free buffer to store a rendered image frame, and the rendering thread is in a waiting state.

In this period, the synthesis thread performs no synthesis.

In the fourth period, all buffers in the buffer queue are occupied. The rendering thread is in the waiting state, and performs no rendering operation; and the main application thread cannot draw a next image frame.

In this period, the synthesis thread performs no synthesis. The display driver displays a received synthesized image frame 9, and a displacement interval of the image frame 9 is 16.

In the fifth period, the synthesis thread interacts with the main application thread, to acquire a queued buffer from the buffer queue and perform a synthesis operation, and the synthesis thread acquires the rendered image frame 11 according to a sequence of image frames and performs a synthesis operation. In this period, a count of queued buffers in the buffer queue is reduced by 1. The display driver displays a received synthesized image frame 10, and a displacement interval of the image frame 10 is 16. Before the display of the synthesized image frame 10 ends, a buffer of the synthesized image frame 9 displayed in the previous period is released, and buffer information of the buffer is returned to the synthesis thread. The synthesis thread returns the buffer information of the buffer to the main application thread, and updates the state of the buffer in the buffer queue through the main application thread. In this case, there is one free buffer in the buffer queue.

The main application thread awakens the rendering thread to perform an operation of storing a rendered image frame, and the rendering thread interacts with the main application thread, to dequeue a free buffer from the buffer queue to perform a storage operation on the rendered image frame 13.

In the sixth period, the main application thread draws an image frame 14, and a displacement interval of the image frame 14 calculated by the main application thread is 48. After completing the drawing on the image frame 14, the main application thread awakens the rendering thread to perform a rendering operation on the image frame 14.

In this period, the synthesis thread interacts with the main application thread, to acquire a queued buffer from the buffer queue and perform a synthesis operation, and the synthesis thread acquires the rendered image frame 12 according to a sequence of image frames and performs a synthesis operation. The display driver displays a received synthesized image frame 11, and a displacement interval of the image frame 11 is 16.

Evidently, the displacement interval of the image frame 14 drawn by the main application thread in this period is different from the displacement interval calculated at the time of drawing the image frame 13, the displacement interval of the image frame 13 is 16, the displacement interval of the image frame 14 is duration of an interval of two periods and is 48 calculated according to a time and a dynamic effect curve, and displacements of two adjacent image frames are excessively large. In this way, in a process in which the screen displays the image frame 13 and the image frame 14, a visual stalling phenomenon occur.

Reference is made to the foregoing use mechanism of buffers in the buffer queue, to analyze a reason that the rendering thread cannot acquire a free buffer from the buffer queue in time in a process of drawing, rendering, and synthesizing a time-related dynamic effect.

The rendering thread performs a storage operation on a rendered image frame into a free buffer in the buffer queue. In the buffer queue, a count of free buffers is gradually reduced, and a count of queued buffers is gradually increased. However, in this case, the synthesis thread does not consume a queued buffer in time, that is, the surface flinger does not acquire a queued buffer in time to perform a synthesis operation on a rendered image frame. As a result, no buffer is sent for display and released to be in a free state. A count of free buffers in the buffer queue is increasingly small, the synthesis thread always performs no synthesis operation, and when there is no free buffer in the buffer queue, the rendering thread cannot acquire a free buffer anymore from the buffer queue to perform a storage operation on a rendered image frame. As a result, the rendering thread is in the waiting state, the rendering thread cannot continue to perform a rendering operation, which affects drawing of the main application thread on a next image frame, and a time interval for which the main application thread waits causes a displacement interval at which the main application thread draws two adjacent image frames.

For example, a reason that the synthesis thread performs no synthesis operation may be: performance of the surface flinger in which the synthesis thread is located is abnormal, to cause an excessively long running time, miss a sending and display signal, and cause frame loss to perform no synthesis operation; or an excessively large interval between two adjacent image frames is caused because of frame cutting, and the synthesis thread cannot wait for a sending and display signal to arrive, and performs no synthesis operation based on a back pressure mechanism.

The back pressure mechanism means that the synthesis thread considers that task piling occurs in a to-be-synthesized image frame (rendered image frame), to cause a misjudgment that the synthesis thread determines that no synthesis operation needs to be performed currently, thereby causing a synthesis task lag of the synthesis thread.

The mechanism of the synthesis thread is that when there is a GPU for synthesis, the current image frame is directly sent to the HWC without waiting for sending and display of the previous image frame to end, an asynchronous buffer queue is maintained in the HWC, and the HWC serially synthesizes the to-be-synthesized image frame sent by the synthesis thread. Because piling is allowed in the asynchronous buffer queue, the synthesis thread performs no synthesis task when determining that task piling occurs in the to-be-synthesized image frame (rendered image frame).

For example, in a process in which the electronic device displays an image frame, a situation of frame rate switching may exist, switching between different frame rates may also cause the surface flinger to perform no synthesis operation, particularly in a scenario of switching from a low frame rate to a high frame rate. For example, at the beginning, the frame rate of the electronic device is 60 Hz, and the application process, the synthesis thread, and the display driver perform corresponding operations of drawing and rendering, synthesis, and sending for display according to a period corresponding to the frame rate 60 Hz. In a period, the frame rate of the electronic device switches to 90 Hz, and the application process, the synthesis thread, and the display driver perform corresponding operations of drawing and rendering, synthesis, and sending for display according to a period corresponding to the frame rate 90 Hz. The duration of the period for the frame rate 90 Hz is shorter than that of the period for the frame rate 60 Hz. That is to say, the application process, the synthesis thread, and the display driver process an image frame in each period at a higher speed when the frame rate is 90 Hz, and the application process, the synthesis thread, and the display driver process an image frame in each period at a lower speed when the frame rate is 60 Hz. When the display driver displays a synthesized image frame at a frame rate of 60 Hz and in a period of 16.6 milliseconds, the application process has begun to draw and render the image frame at a frame rate of 90 Hz and in a period of 11.1 milliseconds. As a result, a speed at which the display driver displays an image frame is lower than a speed at which the application process draws and renders an image frame and a speed at which the synthesis thread synthesizes an image frame. Therefore, synthesized image frames are piled, thereby causing a misjudgment to the synthesis thread that no synthesis operation needs to be performed currently.

Because the synthesis thread performs no synthesis, no consumer in the buffer queue performs consumption, and further the rendering thread dequeues no free buffer from the buffer queue, thereby blocking normal operations of the rendering thread and the main application thread, to cause the foregoing problem.

In addition to the reason that may cause the synthesis thread to perform no synthesis operation described in the foregoing embodiment, in some normal running scenarios of the electronic device, other cases that the synthesis thread cannot synthesize an image further exist, for example, a case that the synthesis thread performs no synthesis operation because the synthesis thread enters a dead (Dead) state; or a case that the synthesis thread performs no synthesis operation because input output (I/O) access of the electronic device is abnormal; or a case that the synthesis thread performs no synthesis operation because a central processing unit (central processing unit, CPU) resource of the electronic device is abnormal.

This embodiment provides an image processing method, which can effectively avoid a problem that when the synthesis thread performs no synthesis operation, the rendering thread cannot dequeue a free buffer from the buffer queue to perform a storage operation on a rendered image frame because there is no free buffer in the buffer queue, thereby affecting drawing and rendering performed by the main application thread on a next image frame, causing frame loss when the main application thread draws an image frame, and causing stalling to occur in an image frame sent for display.

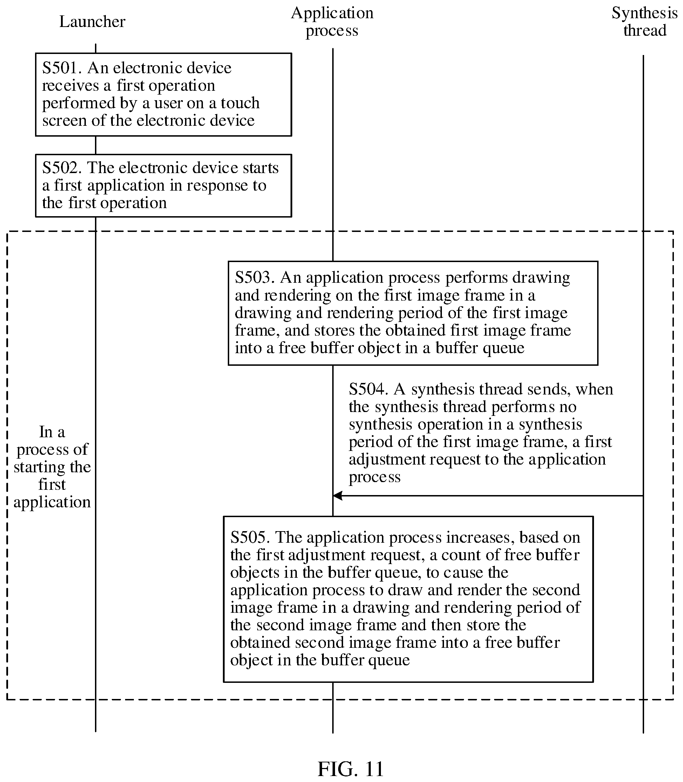

Based on the hardware structure of the electronic device and the software architecture of the electronic device shown in FIG. 4 and FIG. 5, using an example in which the electronic device 100 performs an embodiment of the present disclosure, an image processing method is provided. For example, FIG. 11 provides an example in which a user performs a first operation based on a display screen of an electronic device, and the electronic device starts a first application in response to the first operation; and in a process of starting the first application, an application process and a synthesis thread of the electronic device interact to implement an image processing method. The method includes:

S501. An electronic device receives a first operation performed by a user on a touch screen of the electronic device.

The execution body may be a desktop application of the electronic device, for example, a launcher (launcher) of the electronic device, and the launcher is used for receiving the first operation performed by the user on the touch screen of the electronic device. The first operation may be a single-tap operation, a double-tap operation, or the like performed by the user on the touch screen. The first operation is a selection operation performed by the user on a desktop application of the electronic device. For example, the first operation is a single-tap operation performed by the user on the first application on the desktop of the electronic device on the touch screen. Reference may be made to (a) of FIG. 1. The first operation may be a single-tap operation performed by the user on the application 5 on the touch screen of the mobile phone, and is used for starting the application 5.

S502. The electronic device starts a first application in response to the first operation.

The launcher starts a desktop application corresponding to the first operation in response to the first operation. Referring to FIG. 1, the user performs a single-tap operation on the application 5 on the touch screen of the mobile phone, and the launcher starts the application 5 in response to the single-tap operation.

In a process of starting the application 5, the launcher displays all image frames in the dynamic effect of starting of the application 5 on the desktop of the mobile phone. For example, the image frames in the dynamic effect of starting of the application 5 include five image frames. For a process of displaying the dynamic effect of starting of the started application 5, reference may be made to (b) of FIG. 1 to (f) of FIG. 1. All image frames in the started dynamic effect have a sequence.

In a process of starting the first application, the following steps are performed:

S503. An application process performs drawing and rendering on the first image frame in a drawing and rendering period of the first image frame, and stores the obtained first image frame into a free buffer object in a buffer queue.

Before five image frames in the dynamic effect of starting of the started application 5 are displayed, the electronic device needs to draw, render, and synthesize these image frames, and then sends a synthesized image frame for display, to present a final display effect from (b) of FIG. 1 to (f) of FIG. 1.

Generally, the application process draws and renders an image frame. Specifically, the main application thread in the application process draws an image frame, and the rendering thread in the application process renders the drawn image frame. The synthesis thread synthesizes the rendered image frame.

The first image frame is an image frame in the dynamic effect of starting in a starting process of the application 5.

In the starting process of the application 5, the main application thread of the application process draws the first image frame in a drawing and rendering period of the first image frame, and the rendering thread of the application process renders the drawn first image frame, to obtain a rendered first image frame. When the buffer queue includes free buffer objects, the rendering thread stores the rendered first image frame into a free buffer object in the buffer queue. Correspondingly, after the rendered first image frame is stored into a free buffer object in the buffer queue, a count of the free buffer objects in the buffer queue is reduced by 1.

S504. A synthesis thread sends, when the synthesis thread performs no synthesis operation in a synthesis period of the first image frame, a first adjustment request to the application process.

The synthesis period of the first image frame is later than the drawing and rendering period of the first image frame. When the synthesis thread performs no synthesis operation in the synthesis period of the first image frame, that is, the synthesis thread performs no synthesis operation on the rendered first image frame, no consumption is performed in the buffer queue, and there may be a case that no free buffer object exists in the buffer queue. In this case, the synthesis thread sends the first adjustment request to the application process.

S505. The application process increases, based on the first adjustment request, a count of free buffer objects in the buffer queue, to cause the application process to draw and render the second image frame in a drawing and rendering period of the second image frame and then store the obtained second image frame into a free buffer object in the buffer queue.

The first adjustment request may carry a first indication value, and the first indication value is used for indicating an increased count of buffer objects, to increase a count of free buffer objects in the buffer queue. A free buffer object is a free buffer in the buffer queue.

The application process increases the count of the free buffer objects in the buffer queue according to the first indication value in the first adjustment request. For example, if the first indication value is 1, the application process increases the count of the free buffer objects in the buffer queue by 1. For example, if the first indication value is 2, the application process increases the count of the free buffer objects in the buffer queue by 2.

After the count of the free buffer objects in the buffer queue is increased, it can be ensured that at least one free buffer object in the buffer queue can be always used by the application process. To be specific, at least one free buffer object in the buffer queue can be always used by the rendering thread of the application process to store an image frame obtained in a drawing and rendering period of a next image frame, for example, the second image frame obtained in the drawing and rendering period of the second image frame. The second image frame is an image frame in the dynamic effect of starting in a starting process of the application 5.

The drawing and rendering period of the second image frame is later than the drawing and rendering period of the first image frame, a drawing start moment of the second image frame is different from a drawing start moment of the first image frame by N periods, and N is a positive integer.

Image frames in the started dynamic effect have a sequence. The drawing and rendering period of the second image frame is later than the drawing and rendering period of the first image frame. Optionally, the drawing and rendering period of the second image frame may be a next period of the drawing and rendering period of the first image frame; or the drawing and rendering period of the second image frame may be an $N^{th}$ period after the drawing and rendering period of the first image frame, for example, the drawing and rendering period of the second image frame may be the second period after the drawing and rendering period of the first image frame.

Optionally, the first image frame and the second image frame may alternatively be image frames after starting of the first application is completed by the electronic device. For example, a plurality of image frames in a picture are displayed inside the first application.

Optionally, the first image frame and the second image frame may alternatively be image frames in a process of switching, by the electronic device, from a first refresh rate to a second refresh rate in the starting process of the first application. The first refresh rate is less than the second refresh rate.

A refresh rate is a frame rate of the electronic device. The first refresh rate may be 60 Hz, that is, 60 frames of pictures are refreshed in 1 second, and one frame picture is refreshed every 16.6 milliseconds. The second refresh rate may be 90 Hz, that is, 90 frames of pictures are refreshed in 1 second, and one frame picture is refreshed every 11.1 milliseconds.

in a scenario of switching between refresh rates, the image processing method provided in this embodiment can effectively resolve a problem that in an application starting process, because of switching between refresh rates, processing periods of the synthesis thread and the application process are asynchronous, and the synthesis thread considers that tasks are piled up for to-be-synthesized image frames and performs no synthesis operation, and consequently no buffer object is released in the buffer queue.

In this embodiment, in a starting process in which the electronic device executes an application, image processing is performed on an image frame whose dynamic effect is started in the starting process. When the synthesis thread performs no synthesis operation, a count of free buffer objects in the buffer queue is dynamically increased, so that at least one free buffer object in the buffer queue is always used by the application process. The application process can store a rendered image frame into a free buffer object in the buffer queue in a drawing and rendering period of each image frame, to avoid a case that frame loss may occur in a process in which the application process draws and renders image frames, resolve a problem of display stalling that occurs after an image frame is sent for display and that is caused because of the frame loss, and improve display fluency of starting a dynamic effect in an application starting process.

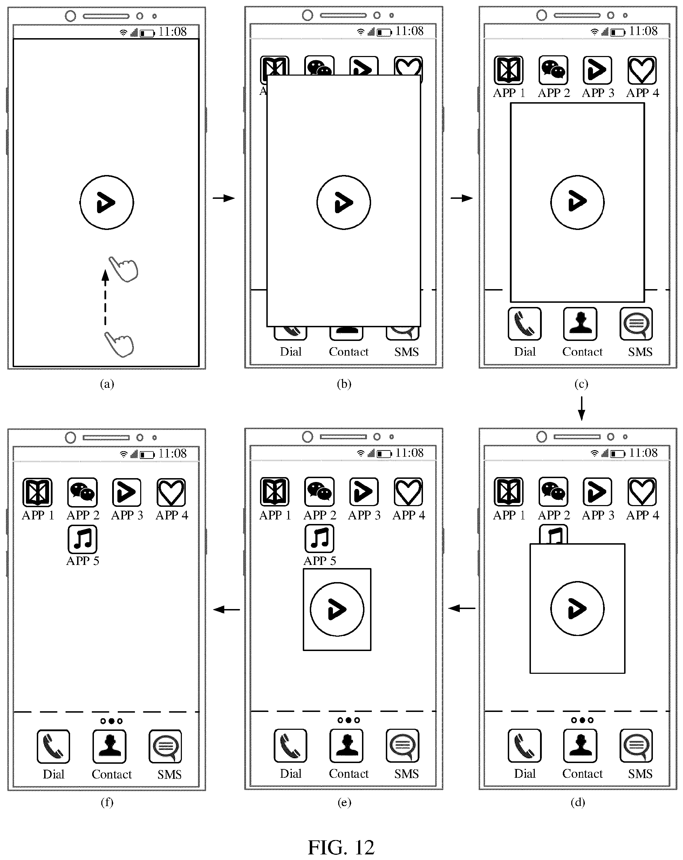

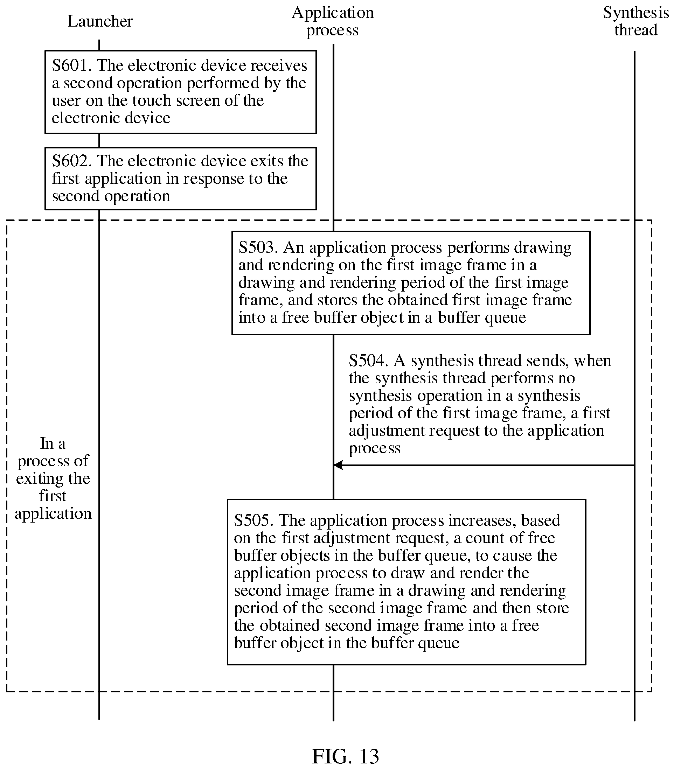

Optionally, referring to FIG. 12, a user may alternatively perform a second operation based on a display screen of an electronic device, and the electronic device exits the first application in response to the second operation. Referring to FIG. 13, FIG. 13 provides an example in which in a process of exiting the first application, an application process and a synthesis thread of the electronic device interact to implement an image processing method. The method includes:

S601. The electronic device receives a second operation performed by the user on the touch screen of the electronic device.

Optionally, the second operation may be an upward slide operation.

Correspondingly, the execution body may be a desktop application of the electronic device, for example, a launcher (launcher) of the electronic device, and the launcher is used for receiving the second operation performed by the user on the touch screen of the electronic device. The second operation may be a slide operation or the like performed by the user on the touch screen. The first operation is an exiting operation performed by the user on an application of the electronic device. For example, the second operation is an upward slide and exiting operation performed by the user on the first application on the desktop on the touch screen. Reference may be made to (a) of FIG. 12. The first operation may be an upward slide operation performed by the user on the application 5 on the touch screen of the mobile phone, and is used for exiting the application 5, to return to the desktop of the mobile phone.

S602. The electronic device exits the first application in response to the second operation.

The launcher exits the current interface of the application corresponding to the second operation in response to the second operation, to return to the desktop of the mobile phone. Referring to FIG. 12, the user performs an upward slide operation on the application 5 on the touch screen of the mobile phone, and the launcher exits the application 5 in response to the upward slide operation, to return to the display interface of the desktop of the mobile phone.

In a process of exiting the application 5, the launcher displays all image frames in the dynamic effect of exiting of the application 5 on the desktop of the mobile phone. For example, the image frames in the dynamic effect of exiting of the application 5 include five image frames. For a process of displaying the dynamic effect of exiting of the exited application 5, reference may be made to (b) of FIG. 12 to (f) of FIG. 12. All image frames in the exited dynamic effect have a sequence.

In a process of exiting the first application, the electronic device performs the following steps:

S503. An application process performs drawing and rendering on the first image frame in a drawing and rendering period of the first image frame, and stores the obtained first image frame into a free buffer object in a buffer queue.

Before five image frames in the dynamic effect of exiting of the exited application 5 are displayed, the electronic device needs to draw, render, and synthesize these image frames, and then sends a synthesized image frame for display, to present a final display effect from (b) of FIG. 12 to (f) of FIG. 12.

The first image frame is an image frame in the dynamic effect of exiting in an exiting process of the application 5.

In the starting process of the application 5, the main application thread of the application process draws the first image frame in a drawing and rendering period of the first image frame, and the rendering thread of the application process renders the drawn first image frame, to obtain a rendered first image frame. When the buffer queue includes free buffer objects, the rendering thread stores the rendered first image frame into a free buffer object in the buffer queue. Correspondingly, after the rendered first image frame is stored into a free buffer object in the buffer queue, a count of the free buffer objects in the buffer queue is reduced by 1.

S504. A synthesis thread sends, when the synthesis thread performs no synthesis operation in a synthesis period of the first image frame, a first adjustment request to the application process.

The synthesis period of the first image frame is later than the drawing and rendering period of the first image frame. When the synthesis thread performs no synthesis operation in the synthesis period of the first image frame, that is, the synthesis thread performs no synthesis operation on the rendered first image frame, no consumption is performed in the buffer queue, and there may be a case that no free buffer object exists in the buffer queue. In this case, the synthesis thread sends the first adjustment request to the application process.

S505. The application process increases, based on the first adjustment request, a count of free buffer objects in the buffer queue, to cause the application process to draw and render the second image frame in a drawing and rendering period of the second image frame and then store the obtained second image frame into a free buffer object in the buffer queue.

The first adjustment request may carry a first indication value, and the first indication value is used for indicating an increased count of buffer objects, to increase a count of free buffer objects in the buffer queue.

The application process increases the count of the free buffer objects in the buffer queue according to the first indication value in the first adjustment request. For example, if the first indication value is 1, the application process increases the count of the free buffer objects in the buffer queue by 1. For example, if the first indication value is 2, the application process increases the count of the free buffer objects in the buffer queue by 2.

After the count of the free buffer objects in the buffer queue is increased, it can be ensured that at least one free buffer object in the buffer queue can be always used by the application process. To be specific, at least one free buffer object in the buffer queue can be always used by the rendering thread of the application process to store an image frame obtained in a drawing and rendering period of a next image frame, for example, the second image frame obtained in the drawing and rendering period of the second image frame. The second image frame is an image frame in the dynamic effect of exiting in an exiting process of the application 5.

The drawing and rendering period of the second image frame is later than the drawing and rendering period of the first image frame, a drawing start moment of the second image frame is different from a drawing start moment of the first image frame by N periods, and N is a positive integer.

Image frames in the exited dynamic effect have a sequence. The drawing and rendering period of the second image frame is later than the drawing and rendering period of the first image frame. Optionally, the drawing and rendering period of the second image frame may be a next period of the drawing and rendering period of the first image frame; or the drawing and rendering period of the second image frame may be an $N^{th}$ period after the drawing and rendering period of the first image frame, for example, the drawing and rendering period of the second image frame may be the second period after the drawing and rendering period of the first image frame.

Optionally, the first image frame and the second image frame may alternatively be image frames in a process of switching, by the electronic device, from a first refresh rate to a second refresh rate in the exiting process of the first application. The first refresh rate is less than the second refresh rate.

A refresh rate is a frame rate of the electronic device. The first refresh rate may be 60 Hz, that is, 60 frames of pictures are refreshed in 1 second, and one frame picture is refreshed every 16.6 milliseconds. The second refresh rate may be 90 Hz, that is, 90 frames of pictures are refreshed in 1 second, and one frame picture is refreshed every 11.1 milliseconds.

in a scenario of switching between refresh rates, the image processing method provided in this embodiment can effectively resolve a problem that in an application exiting process, because of switching between refresh rates, processing periods of the synthesis thread and the application process are asynchronous, and the synthesis thread considers that tasks are piled up for to-be-synthesized image frames and performs no synthesis operation, and consequently no buffer object is released in the buffer queue.

In this embodiment, in an exiting process in which the electronic device executes an application, image processing is performed on an image frame whose dynamic effect is exited in the exiting process. When the synthesis thread performs no synthesis operation, a count of free buffer objects in the buffer queue is dynamically increased, so that at least one free buffer object in the buffer queue is always used by the application process. The application process can store a rendered image frame into a free buffer object in the buffer queue in a drawing and rendering period of each image frame, to avoid a case that frame loss may occur in a process in which the application process draws and renders image frames, resolve a problem of display stalling that occurs after an image frame is sent for display and that is caused because of the frame loss, and improve display fluency of exiting a dynamic effect in an application exiting process.

It can be understood that, the image processing method of the foregoing steps S503 to S505 performed by the electronic device can be further applied to a process of starting to exiting of the first application.

Optionally, the image processing method of the foregoing steps S503 to S505 performed by the electronic device can be further applied to another scenario, for example, an image processing scenario for image frames in a dynamic effect of an intra-application scenario of the electronic device, an image processing scenario for image frames in a dynamic effect of a game scenario of the electronic device, an image processing scenario for image frames in a dynamic effect of off-screen slide of the electronic device, or another image processing scenario for image frames in a dynamic effect of touch latency of the electronic device. In each of these scenarios, a problem that frame loss occurs in the main application thread and stalling occurs in an image frame sent for display because the synthesis thread of the electronic device performs no synthesis operation can be resolved, thereby optimizing display fluency of image frames.

In addition, in scenarios of application starting of the electronic device (referring to FIG. 1), application exiting of the electronic device (referring to FIG. 12), and off-screen slide of the electronic device (referring to FIG. 2), a possibility that the synthesis thread performs no synthesis operation is large. Therefore, an effect of the image processing method provided in this embodiment is more evident in these scenarios, and the optimized display effect of the dynamic effect is more fluent.

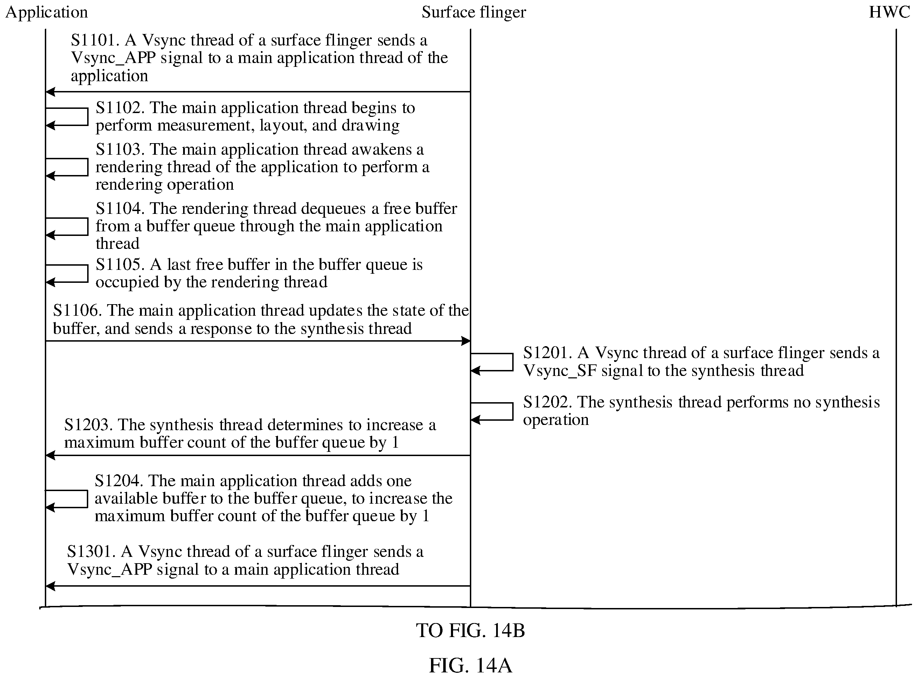

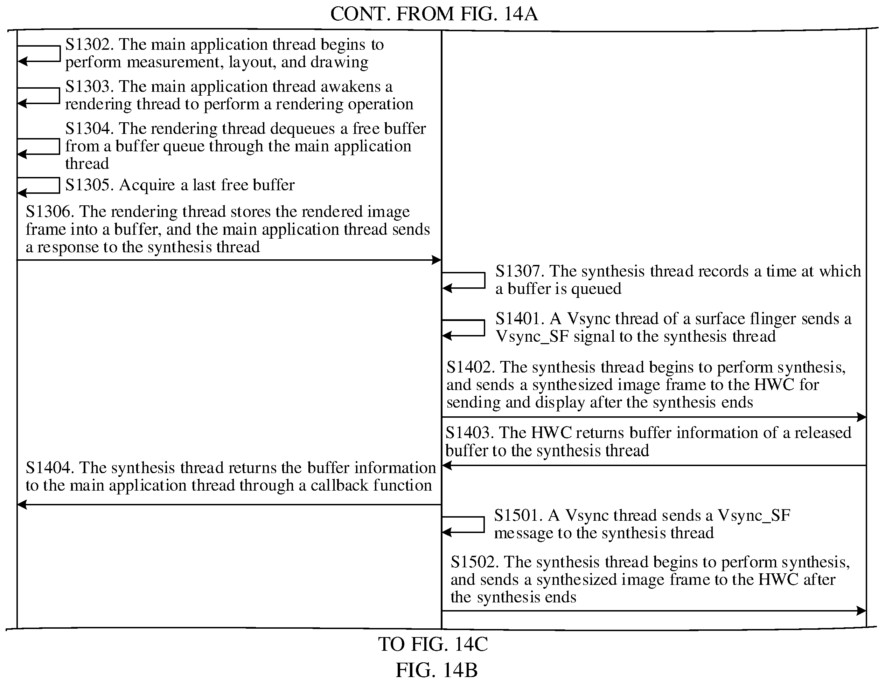

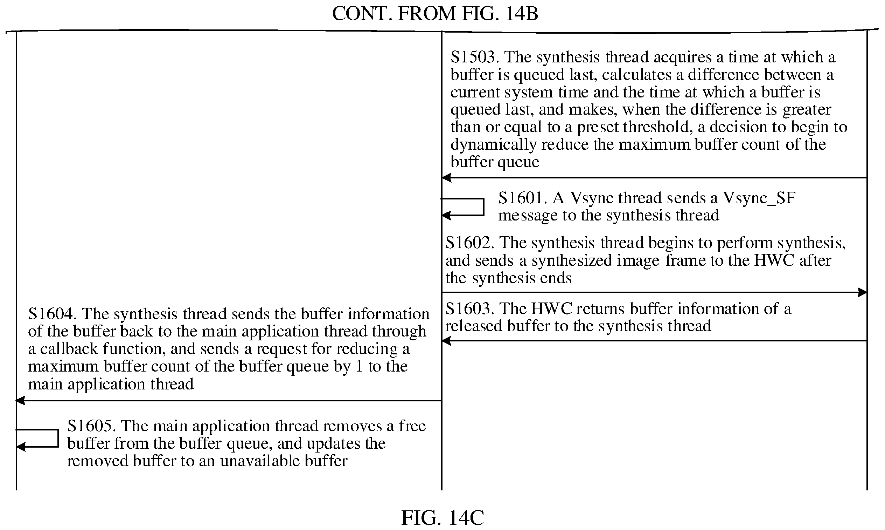

In an example, an image processing method in processes of drawing, rendering, synthesis, and sending for display of image frames in a dynamic effect through interaction among a main application thread and a rendering thread of an application, a synthesis thread of a surface flinger, a Vsync thread of the surface flinger, and an HWC is provided. Referring to a flowchart of a method provided in FIG. 14A, FIG. 14B, and FIG. 14C, the method includes the following several stages:

Stage 1: Stage in which an application performs drawing and rendering:

S1101. A Vsync thread of a surface flinger sends a Vsync_APP signal to a main application thread of the application.

In this embodiment, the surface flinger includes a Vsync thread and a synthesis thread. The Vsync thread is used for generating a Vsync signal. Vsync signals include a Vsync_APP signal and a Vsync_SF signal. The Vsync_APP signal is used for triggering the main application thread to perform a drawing operation on an image frame. The Vsync_SF signal is used for triggering the synthesis thread to perform a synthesis operation on an image frame.

The Vsync thread determines a signal period according to a frame rate of an electronic device. For example, a frame rate of the electronic device is 60, an interval between image frames is 16.6 ms, and the Vsync thread generates a Vsync_APP signal every 16.6 ms, and sends the Vsync_APP signal to the main application thread. The Vsync thread generates a Vsync_SF signal every 16.6 ms, and sends the Vsync_SF signal to the synthesis thread.

S1102. The main application thread begins to perform measurement, layout, and drawing.

The main application thread can acquire a system time of drawing the current image frame, and perform displacement measurement and calculation, layout, and drawing on the current frame of image based on a dynamic effect curve and the system time, thereby obtaining the drawn image frame. For example, the image frame may be an image frame 2. It can be considered that the main application thread has completed drawing of an image frame 1 and the rendering thread has completed rendering of the image frame 1.

After the Vsync_APP signal arrives, the main application thread performs a drawing operation on the current image frame in the current period. The drawn image frame is the image frame 2. Before drawing an image frame, the main application thread needs to perform measurement and layout on the image frame, that is, needs to calculate a displacement of the image frame.

This embodiment is directed to drawing of image frames in the first type of dynamic effect whose drawing displacements are related to a system time. For example, a manner of calculating a displacement of an image frame may be:

$$y(t) = t/t_{total} * y_{total}$$

where t is a current time, $t_{total}$ is a total time of display of the dynamic effect, and $y_{total}$ is a displacement distance between the first image frame and the last image frame in the dynamic effect.

Alternatively, a manner of calculating a displacement of an image frame may be:

$$y(t) = y(0) + t * n$$

where y(0) is a displacement of a first image frame in the dynamic effect; t is a calculation time; and n is a preset displacement interval.

Optionally, a manner of calculating t may be represented as:

$$t = t_c - (t_c - t_0)\%q$$

where $t_c$ is a current time; $t_0$ is a drawing time of the first image frame in the dynamic effect; and q is a frame rate of the electronic device.

After a Vsync_APP signal arrives, the main application thread performs measurement, layout, and drawing on the image frame 2 according to a preset manner of calculating a displacement between image frames.

S1103. The main application thread awakens a rendering thread of the application to perform a rendering operation.

After the main application thread completes measurement, layout, and drawing of the image frame 2, the main application thread awakens the rendering thread of the application to perform a rendering operation on the drawn image frame 2.

S1104. The rendering thread dequeues a free buffer from a buffer queue through the main application thread.

In this embodiment, after completing the rendering operation on the image frame 2, the rendering thread interacts with the main application thread, to dequeue a free buffer from the buffer queue to store the rendered image frame 2.

S1105. A last free buffer in the buffer queue is occupied by the rendering thread.

If a free buffer exists in the buffer queue, the rendering thread can interact with the main application thread, to dequeue the free buffer to perform a storage operation on the rendered image frame 1.

Optionally, the rendering thread can dequeue (dequeue) a free buffer from the buffer queue according to a first input first output (first input first output, FIFO) acquiring manner; or the rendering thread can dequeue a free buffer from the buffer queue according to another agreed manner.

After the rendering thread dequeues a free buffer, the main application thread updates the state of the buffer to dequeued.

S1106. The main application thread updates the state of the buffer, and sends a response to the synthesis thread.

The rendering thread can queue (queue) a buffer for the rendered image frame 2 into the buffer queue according to a first input first output FIFO acquiring manner; or the rendering thread can queue (queue) a buffer for the rendered image frame 2 into the buffer queue according to another agreed manner. After storing the rendered image frame 2 into the buffer, the rendering thread queues the buffer in which the rendered image frame 2 is stored into the buffer queue. By interacting with the main application thread, the main application thread updated the state of the buffer to queued. The main application thread updates the state of the buffer, and then sends a response to the synthesis thread, so that the synthesis thread acquires the queued buffer and performs a synthesis operation.

Stage 2: Stage in which a synthesis thread performs no synthesis:
S1201. A Vsync thread of a surface flinger sends a Vsync_SF signal to the synthesis thread.

In this embodiment, the Vsync thread of the surface flinger generates a Vsync_SF signal according to a frame interval, and sends the Vsync_SF signal to the synthesis thread. The synthesis thread determines whether to perform a synthesis operation on an image frame.

S1202. The synthesis thread performs no synthesis operation.

In this embodiment, when a Vsync_SF signal arrives, the synthesis thread determines to perform no synthesis operation in a current synthesis period. That the synthesis thread does not synthesize an image frame in the buffer queue means that in the buffer queue, no queued buffer is consumed and no acquired buffer is released. The current synthesis period of the synthesis thread is a next period of the drawing period of the image frame 2 of the main application thread.

S1203. The synthesis thread determines to increase a maximum buffer count of the buffer queue by 1.

In this embodiment, the synthesis thread performs no synthesis operation, and consequently no queued buffer in the buffer queue is consumed inevitably. In this case, if it is determined that no synthesis operation is performed in the current period, the synthesis thread increases the maximum buffer count (MaxBufferCount) in the buffer queue by 1.

Optionally, the synthesis thread can determine, through a timer, whether to perform a synthesis operation in a period of time, and determine, if no synthesis operation is performed, to increase the maximum buffer count of the buffer queue by 1. The period of time may alternatively be duration of N periods corresponding to the current frame rate, where N is 1, 2, 3, ..., or k (integer). To adjust the maximum buffer count of the buffer queue more effectively, N should not be excessively large. It should be noted that when N is 2, it indicates that the synthesis thread performs no synthesis operation in two consecutive periods.

Optionally, the synthesis thread can send a request for increasing MaxBufferCount by 1 to the main application thread, so that the main application thread performs a corresponding operation based on the request. For example, when receiving the request for increasing MaxBufferCount by 1 from the synthesis thread, the main application thread increases the maximum buffer count of the buffer queue. The surface flinger can first query MaxBufferCount of the buffer queue, and then determine an increased count according to MaxBufferCount. Optionally, the surface flinger can invoke a preset query function to query MaxBufferCount of the buffer queue from the main application thread. For example, the preset query function may be IGrapgicBufferComsumer, a getMaxBufferCount interface is added to IGrapgicBufferComsumer to dynamically query a maximum value, the surface flinger is used as a consumer during query, and an IGrapgicBufferComsumer::getMaxBufferCount() function is invoked to perform query in the main application thread by invoking a thread Binder.

Optionally, the main application thread can acquire a buffer from other buffers not used by the synthesis thread or the rendering thread, set the buffer as a buffer that can be used by the synthesis thread and the rendering thread, thereby increasing a maximum buffer count of a buffer queue.

S1204. The main application thread adds one available buffer to the buffer queue, to increase the maximum buffer count of the buffer queue by 1.

In this embodiment, buffers in the electronic device are occupied by various threads to perform corresponding operations, some buffers can be used by the synthesis thread and the rendering thread, to implement drawing, rendering, and synthesis operations on an image frame, and these buffers form the buffer queue in this embodiment. Some buffers are disallowed to be used by the synthesis thread and the rendering thread, and these buffers are referred to as unavailable buffers in this embodiment. The unavailable buffers include free buffers and occupied buffers. The main application thread can acquire a free buffer from the unavailable buffers, and add the free buffer to the buffer queue in this embodiment, thereby increasing MaxBufferCount of the buffer queue, so that MaxBufferCount of the buffer queue is increased by 1.

After the main application thread increases MaxBufferCount of the buffer queue, at least one free buffer in the buffer queue can be used by the rendering thread.

Stage 3: Stage in which an application performs drawing and rendering:

S1301. A Vsync thread of a surface flinger sends a Vsync_APP signal to a main application thread.

In this embodiment, the Vsync thread generates the Vsync_APP signal according to a frame interval and sends the Vsync_APP signal to the main application thread, and the main application thread begins to perform drawing and rendering operations on the image frame when receiving the Vsync_APP signal.

S1302. The main application thread begins to perform measurement, layout, and drawing.

Similar to step 1102, the main application thread can acquire a system time of drawing the current image frame, and perform displacement measurement and calculation, layout, and drawing on the current frame of image based on a dynamic effect curve and the system time, thereby obtaining the drawn image frame. For example, the image frame may be an image frame 3.

The period in which the main application thread draws the image frame 3 is a next period of the period for drawing the image frame 2, and the period in which the main application thread draws the image frame 3 can be considered as a normal period. The displacement interval of the image frame 3 is the same as the displacement interval of the image frame 2. Alternatively, the displacement interval of the image frame 3 is equal to a preset displacement interval threshold.

S1303. The main application thread awakens a rendering thread to perform a rendering operation.

After the main application thread completes measurement, layout, and drawing of the image frame 3, the main application thread awakens the rendering thread of the application to perform a rendering operation on the drawn image frame 3.

S 1304. The rendering thread dequeues a free buffer from a buffer queue through the main application thread.

Because the main application thread increases MaxBufferCount of the buffer queue in S1204, at least one free buffer in the buffer queue can be used by the rendering thread. The rendering thread dequeues a free buffer from the buffer queue, to store the rendered image frame 3.

S1305. Acquire a last free buffer.

In this embodiment, there is a last free buffer remaining in the buffer queue. In this embodiment, the free buffer is a buffer added by the main application thread. Before the main application thread adds a buffer to the buffer queue, all buffers in the buffer queue are occupied.

The rendering thread of the application acquires the last free buffer in the buffer queue to perform a storage operation on the rendered image frame 3.

After the rendering thread dequeues a free buffer, the main application thread can update the state of the buffer in the buffer queue, to update the state of the buffer from free to dequeued.

S 1306. The rendering thread stores the rendered image frame into a buffer, and the main application thread sends a response to the synthesis thread.

The rendering thread interacts with the main application thread, to queue the buffer in which the rendered image frame 3 is stored into the buffer queue, and the main application thread updated the state of the buffer from dequeued to queued. The main application thread sends a response to the synthesis thread, so that the synthesis thread can acquire a queued buffer from the buffer queue to perform a synthesis operation on the rendered image frame.

S1307. The synthesis thread records a time at which a buffer is queued.

In this embodiment, the synthesis thread receives the response sent by the main application thread, and records the time at which the main application thread queues a buffer. The time at which a buffer is queued can also indicate a time at which the rendering thread performs a rendering operation.

Optionally, the synthesis thread can further acquire the time at which a buffer is queued from the main application thread, thereby recording the acquired time at which a buffer is queued.

In this embodiment, the synthesis thread records the time at which a buffer is queued into the buffer queue each time, and whether the rendering thread normally performs a rendering operation according to a period corresponding to a frame rate can be determined by comparing times at which a buffer is queued two adjacent times. If a time difference between the times at which a buffer is queued two adjacent times is consistent with the frame interval, it is considered that the rendering thread normally performs a rendering operation according to a period, indicating that consumption and production of buffers in the buffer queue of the application are in a balanced state, that is, the rendering thread can dequeue a free buffer for use from the buffer queue. If the time difference between the times at which a buffer is queued two adjacent times is greater than the frame interval, it is considered that the rendering thread is abnormal, or the rendering thread has completed rendering operations on all image frames in the current dynamic effect. In this case, production of buffers in the buffer queue is less than consumption, and therefore the synthesis thread can dynamically adjust the count of buffers in the buffer queue, for example, reduce MaxBufferCount of the buffer queue.

Stage 4: Stage in which a surface flinger performs synthesis and interacts with an HWC and an application:

S1401. A Vsync thread of a surface flinger sends a Vsync_SF signal to the synthesis thread.

After a frame interval, the Vsync thread generates the Vsync_SF signal at a frame rate of the electronic device and sends the Vsync_SF signal to the synthesis thread, and the synthesis thread determines whether to perform a synthesis operation on an image frame after receiving the Vsync_SF signal.

S1402. The synthesis thread begins to perform synthesis, and sends a synthesized image frame to the HWC for sending and display after the synthesis ends.

In this embodiment, after receiving the Vsync_SF signal, the synthesis thread determines to perform a synthesis operation. The synthesis thread interacts with the main application thread, to acquire the rendered image frame 1 from the buffer queue, performs a synthesis operation on the rendered image frame 1, and sends the synthesized image frame 1 to the HWC for display.

Optionally, the synthesis thread can acquire (acquire) a rendered image frame (queued buffer) from the buffer queue according to a FIFO acquiring manner; or the synthesis thread can acquire a queued buffer from the buffer queue according to another agreed manner.

The synthesis thread acquires a queued buffer through the main application thread, and the main application thread can update the state of the buffer from queued to acquired.

S1403. The HWC returns buffer information of a released buffer to the synthesis thread.

In this embodiment, the HWC displays the synthesized image frame 1 sent by the synthesis thread, and releases a buffer for a previous image frame before the display of the synthesized image frame 1 ends. After releasing the buffer occupied by the previous image frame, the HWC returns buffer information of the buffer to the synthesis thread.

S1404. The synthesis thread returns the buffer information to the main application thread through a callback function.

In this embodiment, the synthesis thread returns the buffer information to the main application thread through the callback function, and the main application thread performs an update operation on a state of a buffer in the buffer queue based on the buffer information.

Stage 5: Stage in which a synthesis thread determines whether to adjust a maximum buffer count of a buffer queue:

S1501. A Vsync thread sends a Vsync_SF message to the synthesis thread.

After a frame interval, the Vsync thread generates the Vsync_SF signal and sends the Vsync_SF signal to the synthesis thread, and the synthesis thread determines whether to perform a synthesis operation on an image frame when the Vsync _SF signal arrives.

S1502. The synthesis thread begins to perform synthesis, and sends a synthesized image frame to the HWC after the synthesis ends.

In this embodiment, the synthesis thread determines to perform a synthesis operation. The synthesis thread interacts with the main application thread, to acquire the rendered image frame 2 from the buffer queue, performs a synthesis operation on the rendered image frame 2, and sends the synthesized image frame 2 to the HWC for display.

Optionally, the synthesis thread can acquire a queued buffer from the buffer queue according to a FIFO acquiring manner; or the synthesis thread can acquire a queued buffer from the buffer queue according to another agreed manner. In this embodiment, after performing the synthesis operation, the surface flinger stops the operation of increasing MaxBufferCount of the buffer queue.

After the surface flinger acquires a queued buffer, the main application thread can update the state of the buffer from queued to acquired.

S1503. The synthesis thread acquires a time at which a buffer is queued last, calculates a difference between a current system time and the time at which a buffer is queued last, and makes, when the difference is greater than or equal to a preset threshold, a decision to begin to dynamically reduce the maximum buffer count of the buffer queue.

When the synthesis thread performs a synthesis operation, the synthesis thread determines, according to the time at which a buffer is queued each time in the buffer queue and that is recorded in S1307, whether to adjust MaxBufferCount of the buffer queue. To adjust MaxBufferCount is actually to adjust a count of free buffers in the buffer queue. For example, the synthesis thread can acquire a current system time and a time at which a buffer is queued last, calculate a time difference between the current system time and the time at which a buffer is queued last, and determine, if the time difference is greater than two frame intervals, that frame loss exists in the rendering thread and two image frames are lost. In this case, the synthesis thread can generate a request for reducing MaxBufferCount of the buffer queue, and send the request to the main application thread, to reduce MaxBufferCount.

Optionally, the synthesis thread can further determine whether a count of queued buffers in the buffer queue is increased to determine whether to dynamically reduce a count of free buffers in the buffer queue. For example, if the synthesis thread determines that the count of queued buffers in the buffer queue is not increased anymore, it is determined that the rendering thread performs no rendering operation. In this case, the synthesis thread can also generate a request for reducing MaxBufferCount of the buffer queue, and send the request to the main application thread, to reduce MaxBufferCount.

Optionally, the synthesis thread can invoke a preset query function to query a state of each buffer in the buffer queue from the main application thread, thereby determining whether the count of queued buffers is increased. For example, a getQueuedBufferCount interface may be added to IGrapgicBufferComsumer to dynamically query a count of queued buffers, the synthesis thread is used as a consumer during query, and an IGrapgicBufferComsumer::getQueuedBufferCount () function is invoked to perform query in the main application thread by invoking Binder.

Stage 6: Stage in which a surface flinger dynamically adjusts a maximum buffer count of a buffer queue:

S1601. A Vsync thread sends a Vsync_SF message to the synthesis thread.

After a frame interval, the Vsync thread generates a Vsync_SF signal, and sends the Vsync_SF signal to the synthesis thread. After the Vsync_SF signal arrives, the synthesis thread determines whether to perform a synthesis operation on an image frame.

S1602. The synthesis thread begins to perform synthesis, and sends a synthesized image frame to the HWC after the synthesis ends.

In this embodiment, the synthesis thread determines to perform a synthesis operation. The synthesis thread interacts with the main application thread, to acquire the rendered image frame 3 from the buffer queue, performs a synthesis operation on the rendered image frame 3, and sends the synthesized image frame 3 to the HWC for display.

Optionally, the synthesis thread can acquire (acquire) a buffer (queued buffer) for a rendered image frame from the buffer queue according to a FIFO acquiring manner; or the synthesis thread can acquire a queued buffer from the buffer queue according to another agreed manner. In this embodiment, after performing the synthesis operation, the surface flinger stops the operation of increasing MaxBufferCount.

After the surface flinger acquires a queued buffer, the main application thread can update the state of the buffer from queued to acquired.

S1603. The HWC returns buffer information of a released buffer to the synthesis thread.

In this embodiment, for example, the HWC displays the synthesized image frame 2 sent by the synthesis thread, and releases a buffer for an image frame 1 before the display of the synthesized image frame 2 ends. After releasing the buffer occupied by the image frame 1, the HWC returns buffer information of the buffer to the synthesis thread.

S1604. The synthesis thread sends the buffer information of the buffer back to the main application thread through a callback function, and sends a request for reducing a maximum buffer count of the buffer queue by 1 to the main application thread.

In this embodiment, the synthesis thread returns the buffer information of the buffer to the main application thread through the callback function, and the main application thread performs an update operation on a state of a buffer in the buffer queue according to the buffer information of the buffer. Optionally, the main application thread receives the request for reducing Max-BufferCount of the buffer queue by 1 sent by the synthesis thread, and the main application thread reduces Max-BufferCount of the buffer queue by 1.

S1605. The main application thread removes a free buffer from the buffer queue, and updates the removed buffer to an unavailable buffer.

In this embodiment, the main application thread may remove one free buffer from the buffer queue. One free buffer in the buffer queue is destructed, graphicbuffer is released, and the removed buffer is updated to an unavailable buffer. That the buffer becomes an unavailable buffer means that the buffer is disallowed to be used by the rendering thread and the synthesis thread, and therefore MaxBufferCount of the buffer queue in this embodiment is reduced by 1.

In this embodiment, when performing no synthesis operation, the synthesis thread interacts with the main application thread, to increase MaxBufferCount of the buffer queue, that is, increase a count of free buffers in the buffer queue, which can ensure that even if the synthesis thread does not perform synthesis (that is, the consumer in the buffer queue does not perform consumption), the rendering thread can still acquire a free buffer to perform a storage operation on a rendered image frame (the producer in the buffer queue can still use a free buffer), thereby achieving a balance between production and consumption in the buffer queue, to avoid a problem that the rendering thread cannot acquire a free buffer to perform production because no consumption is performed, performing a rendering operation by the rendering thread is affected, and performing a drawing operation by the main application thread is affected. In this way, the main application thread can normally draw each image frame according to the frame interval, and the rendering thread can normally render each image frame according to the frame interval. In a scenario of a dynamic effect in which a displacement for drawing and rendering an image frame is related to a system time, the main application thread can normally draw each image frame in the dynamic effect based on the manner provided in this embodiment, thereby avoiding the problem in the existing technology that the main application thread draws two adjacent image frames at an excessively large time interval and the excessively large time interval causes visual stalling, improving fluency of presenting the dynamic effect, and avoiding problems of stalling and frame loss.

In addition, after performing a synthesis operation, the synthesis thread determines whether the rendering thread normally works according to the frame interval, generates, if it is determined that the rendering thread performs no rendering operation in at least one period, a request for reducing MaxBufferCount of the buffer queue, and interacts with the main application thread to reduce MaxBufferCount of the buffer queue, that is, reduce a count of free buffers in the buffer queue, which can release redundant buffers in the buffer queue in time. The released buffers can be used for other operations, to improve utilization of the buffers.

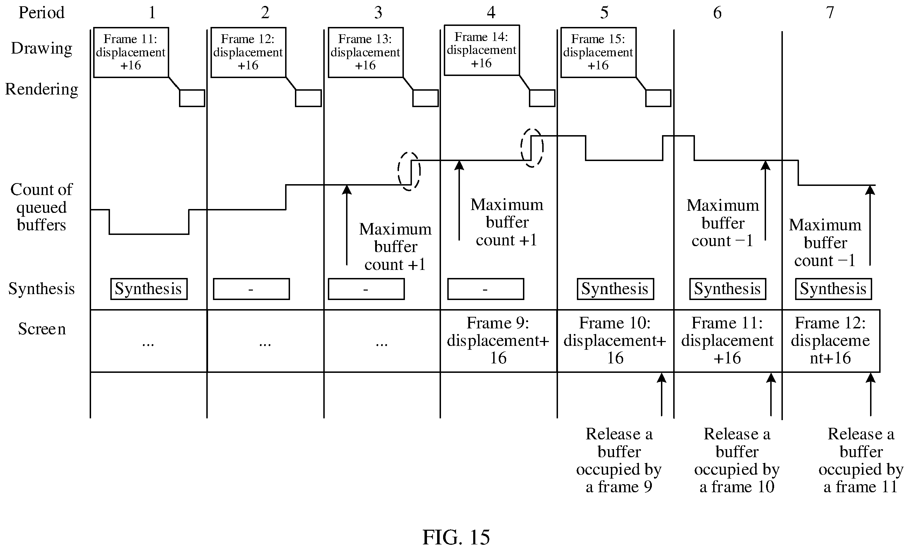

FIG. 15 provides a sequence diagram of changes of MaxBufferCount of a buffer queue in a process of drawing, rendering, and synthesizing an image frame with reference to the image processing method provided in the embodiments of this application. Referring to FIG. 15, a process of dynamically adjusting MaxBufferCount of the buffer queue in this embodiment is further described. According to each partition area, it is considered that a period in which a frame 11 is located is the first period. In this example, MaxBufferCount of the buffer queue is 4.

In the first period, a count of queued buffers in the buffer queue is 2, that is, the buffer queue includes 2 free buffers and 2 queued buffers. The main application thread draws the image frame 11, and a displacement interval of the image frame 11 calculated by the main application thread is 16. After completing the drawing on the image frame 11, the main application thread awakens the rendering thread to render the image frame 11. After completing the rendering on the image frame 11, the rendering thread interacts with the main application thread, to dequeue a free buffer from the buffer queue to store the rendered image frame 11. In the buffer queue, a count of queued buffers is increased by 1, and a count of free buffers is reduced by 1.

In this period, the surface flinger acquires a rendered image frame 10 according to a sequence of image frames, and performs a synthesis operation on the image frame 10. The display driver displays a synthesized image frame 9 through a screen.

In the second period, a count of queued buffers in the buffer queue is 3, that is, the buffer queue includes 3 free buffers and 1 queued buffer. The main application thread draws the image frame 12, and a displacement interval of the image frame 12 calculated by the main application thread is 16. After completing the drawing on the image frame 12, the main application thread awakens the rendering thread to render the image frame 12. After completing the rendering on the image frame 12, the rendering thread interacts with the main application thread, to acquire a last free buffer from the buffer queue to store the rendered image frame 12. In the buffer queue, a count of queued buffers is increased by 1, and a count of free buffers is reduced by 1. In this case, a count of queued buffers in the buffer queue has reached MaxBufferCount.

In this period, the synthesis thread performs no synthesis. The display driver displays a synthesized image frame 9 through a screen.

In the third period, the count of queued buffers in the buffer queue has reached MaxBufferCount, and is 4. To be specific, all buffers in the buffer queue are occupied. The main application thread draws the image frame 13, and a displacement interval of the image frame 13 calculated by the main application thread is 16.

In this period, MaxBufferCount of the buffer queue is dynamically increased, and the count of MaxBufferCount is increased by 1. In this case, MaxBufferCount is 5. The rendering thread can acquire the added last free buffer from the buffer queue to store the rendered image frame 13. The rendering thread and the main application thread are both in a normal state. In this period, the surface flinger performs no synthesis.

In the fourth period, the count of queued buffers in the buffer queue has reached MaxBufferCount, and is 5. all buffers in the buffer queue are occupied. The main application thread draws the image frame 14, and a displacement interval of the image frame 14 calculated by the main application thread is 16.

In this period, the count of buffers in the buffer queue is dynamically increased, and the count of MaxBufferCount is increased by 1. In this case, MaxBufferCount is 6. The rendering thread can acquire the added last free buffer from the buffer queue to store the rendered image frame 14. The rendering thread and the main application thread are both in a normal state.

In this period, the synthesis thread performs no synthesis. The display driver displays a synthesized image frame 9 through a screen.

In the fifth period, the synthesis thread acquires a queued buffer from the buffer queue to perform a synthesis operation in this period, for example, acquires the image frame 11 to perform a synthesis operation. In this period, the count of queued buffers in the buffer queue is reduced by 1 and is 5. The display driver displays a received synthesized image frame 10, and a displacement interval of the image frame 10 is 16. Before the display of the synthesized image frame 10 ends, a buffer of the synthesized image frame 9 is released, and buffer information of the buffer is returned to the synthesis thread. The synthesis thread returns the buffer information to the main application thread, and the main application thread updates a state of a buffer in the buffer queue according to the buffer information. In this case, there is one free buffer in the buffer queue.

The main application thread draws the image frame 15, and a displacement interval of the image frame 15 calculated by the main application thread is 16. The rendering thread interacts with the main application thread, to dequeue a free buffer to store the rendered image frame 15.

In the sixth period, the synthesis thread acquires a queued buffer from the buffer queue to perform a synthesis operation, for example, acquires the image frame 12 to perform a synthesis operation. In this period, the count of queued buffers in the buffer queue is reduced by 1 and is 5.

In this period, the display driver displays the synthesized image frame 11, and a displacement interval of the image frame 11 is 16. Before the display of the synthesized image frame 11 ends, a buffer of the synthesized image frame 10 is released, and buffer information of the buffer is returned to the synthesis thread. The synthesis thread returns the buffer information to the main application thread, and the main application thread updates a state of a buffer in the buffer queue according to the buffer information. In this case, there is one free buffer in the buffer queue.

In this period, the main application thread draws no image frame, and the rendering thread performs no rendering operation on an image frame.

The synthesis thread interacts with the main application thread, to reduce MaxBufferCount of the buffer queue, and reduce the count of MaxBufferCount by 1. In this case, MaxBufferCount is 5.

In the seventh period, the synthesis thread acquires a queued buffer from the buffer queue to perform a synthesis operation, for example, acquires the image frame 13 to perform a synthesis operation. In this period, the count of queued buffers in the buffer queue is reduced by 1 and is 4.

In this period, the display driver displays the synthesized image frame 12, and a displacement interval of the image frame 12 is 16. Before the display of the synthesized image frame 12 ends, a buffer of the synthesized image frame 11 is released, and buffer information of the buffer is returned to the synthesis thread. The synthesis thread returns the buffer information to the main application thread, and the main application thread updates a state of a buffer in the buffer queue according to the buffer information. In this case, there is one free buffer in the buffer queue.

In this period, the main application thread draws no image frame, and the rendering thread performs no rendering operation on an image frame.

The synthesis thread interacts with the main application thread, to reduce MaxBufferCount of the buffer queue, and reduce the count of MaxBufferCount by 1. In this case, MaxBufferCount is 4.

Evidently, in this embodiment, in the second, third, and fourth periods in which the synthesis thread performs no synthesis, a dynamic increase in MaxBufferCount of the buffer queue enables the rendering thread to continuously and stably acquire a free buffer to perform an operation of storing a rendered image frame, and ensures that the main application thread can calculate a displacement of an image frame in each period according to a normal frame interval. Normal running of the main application thread and the rendering thread ensures that a displacement interval between adjacent image frames drawn by the main application thread remains unchanged, and therefore a dynamic effect formed by a plurality of synthesized and displayed adjacent image frames is coherent and smooth, to avoid a problem of visual stalling.

In addition, when it is determined that the main application thread and the rendering thread do not perform drawing and rendering operations, MaxBufferCount of the buffer queue is dynamically reduced, which can release redundant buffers in time and improve utilization of the buffers.

In this embodiment, when a surface flinger does not perform synthesis, free buffer objects in a buffer queue can be dynamically increased, and the application process can continuously normally acquire a free buffer object and store a rendered image frame into the free buffer object, thereby avoiding a problem in an existing technology that an application process cannot acquire a free buffer object and store a rendered image frame into the free buffer object, and performs no rendering operation on a next image frame, thereby causing frame loss to occur in drawing of the next image frame. Through the image processing method provided in this application, at least one free buffer object in the buffer queue can be always used by the application process, to avoid a problem of frame loss occurring when the application process does not perform drawing and rendering operations on image frames because there is no free buffer object in the buffer queue, thereby resolving a problem of visual stalling that occurs after image frames are sent for display and that is caused by the frame loss. By ensuring that the application process has sufficient free buffer objects to perform a storage operation on rendered image frames, fluency of an effect of dynamically displaying the image frames sent for display is ensured.

Some embodiments of this application provide an electronic device. The electronic device may include: a memory, a display screen, and one or more processors. The display screen, the memory, and the processor are coupled. The memory is configured to store computer program code, where the computer program code includes computer instructions. When the processors execute the computer instructions, the electronic device may perform various functions or steps performed by the electronic device in the method embodiments. For a structure of the electronic device, refer to the structure of the electronic device 100 in FIG. 4.

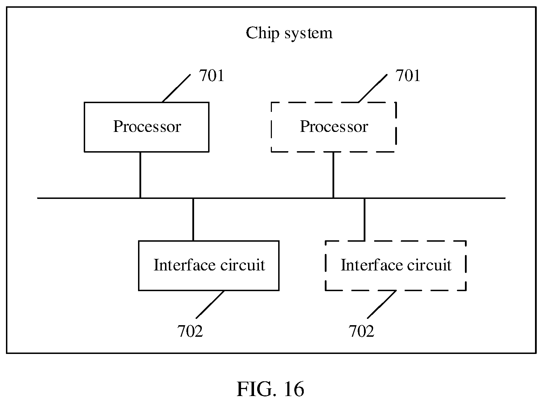

An embodiment of this application further provides a chip system (for example, a system on a chip (system on a chip, SoC)). As shown in FIG. 16, the chip system includes at least one processor 701 and at least one interface circuit 702. The processor 701 and the interface circuit 702 may be connected to each other by using a line. For example, the interface circuit 702 may be configured to receive a signal from another apparatus (such as a memory of an electronic device). For another example, the interface circuit 702 may be configured to send a signal to another apparatus (for example, the processor 701 or a camera of the electronic device). For example, the interface circuit 702 can read instructions stored in the memory and send the instructions to the processor 701. When the instructions are executed by the processor 701, the electronic device may be enabled to perform the steps in the foregoing embodiments. Certainly, the chip system may further include other discrete devices. This is not specifically limited in the embodiments of this application.

An embodiment of this application further provides a computer-readable storage medium. The computer-readable storage medium includes computer instructions. When the computer instructions run on the foregoing electronic device, the electronic device is enabled to perform the functions or steps performed by the electronic device 100 in the foregoing method embodiment.

Embodiments of this application further provide a computer program product. When the computer program product runs on a computer, the computer is enabled to perform the functions or steps performed by the electronic device 100 in the foregoing method embodiments. For example, the computer may be the foregoing electronic device 100.

The foregoing descriptions about implementations allow a person skilled in the art to clearly understand that, for convenient and brief description, division of the foregoing functional modules is taken as an example for illustration. In actual application, the foregoing functions may be allocated to different functional modules and implemented based on a requirement, that is, an inner structure of an apparatus is divided into different functional modules to implement all or some of the foregoing functions.

In the several embodiments provided in this application, it should be understood that the disclosed apparatus and method may be implemented in other manners. For example, the described apparatus embodiment is merely an example. For example, the module or unit division is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware or a software function unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes: any medium that can store program code, such as a USB flash drive, a removable hard disk, a read only memory (read only memory, ROM), a random access memory (random access memory, RAM), a magnetic disk, or a compact disc.

What is described above is merely specific embodiments of this application, but the protection scope of this application is not limited to such embodiments. Any and all variations or replacements made within the technical scope disclosed herein still fall within the protection scope of this application. Therefore, the protection scope of this application shall be subject to the protection scope of the claims.

**Claims**

1. An image processing method, comprising:

   receiving, by an electronic device, a first operation performed by a user on a touch screen of the electronic device;
   starting, by the electronic device, a first application in response to the first operation;
   receiving, by the electronic device, a second operation performed by the user on the touch screen of the electronic device; and
   exiting, by the electronic device, the first application in response to the second operation,
   wherein in a process from starting of the first application to exiting of the first application, the electronic device performs drawing, rendering, and synthesis operations on a first image frame and a second image frame of the first application; and
the performing, by the electronic device, drawing, rendering, and synthesis operations on a first image frame and a second image frame of the first application comprises:

   performing, by an application process, drawing and rendering on the first image frame in a drawing and rendering period of the first image frame, and storing the obtained first image frame into a free buffer object in a buffer queue;
   **characterized in that** the performing further comprises:

   sending, by a synthesis thread when the synthesis thread performs no synthesis operation in a synthesis period of the first image frame, a first adjustment request to the application process; and
   increasing, by the application process based on the first adjustment request, a count of free buffer objects in the buffer queue, to cause the application process to draw and render the second image frame in a drawing and rendering period of the second image frame and then store the obtained second image frame into a free buffer object in the buffer queue, wherein the drawing and rendering period of the second image frame is later than the drawing and rendering period of the first image frame, a drawing start moment of the second image frame is different from a drawing start moment of the first image frame by N periods, and N is a positive integer.

2. The method according to claim 1, wherein the first image frame and the second image frame are image frames in a starting process of the first application.

3. The method according to claim 2, wherein the first image frame and the second image frame are image frames in a process of switching, by the electronic device, from a first refresh rate to a second refresh rate in the starting process of the first application; and the first refresh rate is less than the second refresh rate.

4. The method according to claim 1, wherein the first image frame and the second image frame are image frames after starting of the first application is completed.

5. The method according to claim 1, wherein the first image frame and the second image frame are image frames in an exiting process of the first application.

6. The method according to claim 5, wherein the first image frame and the second image frame are image frames in a process of switching, by the electronic device, from a first refresh rate to a second refresh rate in the exiting process of the first application; and the first refresh rate is less than the second refresh rate.

7. The method according to any one of claims 1 to 6, wherein the drawing and rendering period of the second image frame is a next period of the drawing and rendering period of the first image frame; and the drawing start moment of the second image frame is different from the drawing start moment of the first image frame by one period.

8. The method according to any one of claims 1 to 6, wherein the first adjustment request comprises a first indication value; and the first indication value is used for indicating an increased count of buffer objects, and the increasing a count of free buffer objects in the buffer queue comprises:
adding, by the application process, free buffer objects of the first indication value to the buffer queue.

9. The method according to claim 8, wherein the adding, by the application process, free buffer objects of the first indication value to the buffer queue comprises:
adding, by the application process, addresses of the free buffer objects of the first indication value to the buffer queue according to a queuing sequence.

10. The method according to any one of claims 1 to 6, further comprising:

querying, by the synthesis thread, a count of all buffer objects in the buffer queue; and
stopping, by the synthesis thread if the count of all the buffer objects reaches a maximum buffer object count, sending the first adjustment request for the buffer objects to the application process.

11. The method according to any one of claims 1 to 6, wherein after the storing the first image frame into a free buffer object in a buffer queue, the method further comprises:
acquiring and recording, by the synthesis thread, a storage moment at which the application process stores the first image frame into a target buffer object.

12. The method according to claim 11, further comprising:

determining, by the synthesis thread when the synthesis thread performs a synthesis operation in the synthesis period of the first image frame, a time difference between a current system moment and a storage moment at which an image frame recorded last is stored into the target buffer object;
sending, by the synthesis thread if the time difference is greater than or equal to a preset time threshold, a second adjustment request for the buffer objects to the application process; and
reducing, by the application process, the count of the free buffer objects in the buffer queue according to the second adjustment request.

13. The method according to claim 12, wherein the second adjustment request comprises a second indication value, and the second indication value is used for indicating a reduced count of buffer objects; and the reducing the count of the free buffer objects in the buffer queue comprises:
subtracting, by the application process, free buffer objects of the second indication value from the buffer queue.

14. An electronic device, comprising a memory, a display screen, and one or more processors, wherein the memory, the display screen, and the processor are coupled; and the memory stores computer program code, the computer program code comprises computer instructions, and the computer instructions, when executed by the processor, cause the electronic device to perform the method according to any one of claims 1 to 13.

15. A computer-readable storage medium, comprising computer instructions, wherein when the computer instructions are run on an electronic device, the electronic device is caused to perform the method according to any one of claims 1 to 13.

**Patentansprüche**

1. Bildverarbeitungsverfahren, umfassend:

Empfangen einer ersten Operation, die von einem Benutzer auf einem Touchscreen einer elektronischen Vorrichtung durchgeführt wird, durch die elektronische Vorrichtung;
Starten einer ersten Anwendung durch die elektronische Vorrichtung als Reaktion auf die erste Operation;
Empfangen einer zweiten Operation, die vom Benutzer auf dem Touchscreen der elektronischen Vorrichtung durchgeführt wird, durch die elektronische Vorrichtung; und

Beenden der ersten Anwendung durch die elektronische Vorrichtung als Reaktion auf die zweite Operation,

wobei in einem Prozess vom Starten der ersten Anwendung bis zum Beenden der ersten Anwendung die elektronische Vorrichtung Zeichen-, Rendering- und Syntheseoperationen an einem ersten Bildframe und einem zweiten Bildframe der ersten Anwendung durchführt; und

das Durchführen von Zeichen-, Rendering- und Syntheseoperationen an einem ersten Bildframe und einem zweiten Bildframe der ersten Anwendung durch die elektronische Vorrichtung Folgendes umfasst:

Durchführen von Zeichnen und Rendering an dem ersten Bildframe in einer Zeichen- und Rendering-Periode des ersten Bildframes durch einen Anwendungsprozess und Speichern des erhaltenen ersten Bildframes in einem freien Pufferobjekt in einer Pufferwarteschlange; **dadurch gekennzeichnet, dass** das Durchführen ferner umfasst:

Senden einer ersten Anpassungsanforderung an den Anwendungsprozess durch einen Synthese-Thread, wenn der Synthese-Thread keine Syntheseoperation in einer Syntheseperiode des ersten Bildframes durchführt; und

Erhöhen einer Anzahl von freien Pufferobjekten in der Pufferwarteschlange durch den Anwendungsprozess basierend auf der ersten Anpassungsanforderung, um den Anwendungsprozess dazu zu veranlassen, den zweiten Bildframe in einer Zeichen- und Rendering-Periode des zweiten Bildframes zu zeichnen und zu rendern und dann den erhaltenen zweiten Bildframe in einem freien Pufferobjekt in der Pufferwarteschlange zu speichern, wobei die Zeichen- und Rendering-Periode des zweiten Bildframes später als die Zeichen- und Rendering-Periode des ersten Bildframes ist, ein Zeichenstartmoment des zweiten Bildframes sich von einem Zeichenstartmoment des ersten Bildframes um N Perioden unterscheidet und N eine positive Ganzzahl ist.

2. Verfahren nach Anspruch 1, wobei der erste Bildframe und der zweite Bildframe Bildframes in einem Startprozess der ersten Anwendung sind.

3. Verfahren nach Anspruch 2, wobei der erste Bildframe und der zweite Bildframe Bildframes in einem Prozess des Umschaltens der elektronischen Vorrichtung von einer ersten Bildwiederholfrequenz auf eine zweite Bildwiederholfrequenz im Startprozess der ersten Anwendung sind; und die erste Bildwiederholfrequenz niedriger als die zweite Bildwiederholfrequenz ist.

4. Verfahren nach Anspruch 1, wobei der erste Bildframe und der zweite Bildframe Bildframes nach Abschluss des Startens der ersten Anwendung sind.

5. Verfahren nach Anspruch 1, wobei der erste Bildframe und der zweite Bildframe Bildframes in einem Beendigungsprozess der ersten Anwendung sind.

6. Verfahren nach Anspruch 5, wobei der erste Bildframe und der zweite Bildframe Bildframes in einem Prozess des Umschaltens der elektronischen Vorrichtung von einer ersten Bildwiederholfrequenz auf eine zweite Bildwiederholfrequenz im Beendigungsprozess der ersten Anwendung sind; und die erste Bildwiederholfrequenz niedriger als die zweite Bildwiederholfrequenz ist.

7. Verfahren nach einem der Ansprüche 1 bis 6, wobei die Zeichen- und Rendering-Periode des zweiten Bildframes eine nächste Periode der Zeichen- und Rendering-Periode des ersten Bildframes ist; und der Zeichenstartmoment des zweiten Bildframes sich vom Zeichenstartmoment des ersten Bildframes um eine Periode unterscheidet.

8. Verfahren nach einem der Ansprüche 1 bis 6, wobei die erste Anpassungsanforderung einen ersten Angabewert umfasst; und der erste Angabewert zum Angeben einer erhöhten Anzahl von Pufferobjekten verwendet wird und das Erhöhen einer Anzahl von freien Pufferobjekten in der Pufferwarteschlange umfasst:

Hinzufügen von freien Pufferobjekten des ersten Angabewerts zur Pufferwarteschlange durch den Anwendungsprozess.

9. Verfahren nach Anspruch 8, wobei das Hinzufügen von freien Pufferobjekten des ersten Angabewerts zur Pufferwarteschlange durch den Anwendungsprozess umfasst:

Hinzufügen von Adressen der freien Pufferobjekte des ersten Angabewerts zur Pufferwarteschlange gemäß einer Warteschlangenfolge durch den Anwendungsprozess.

10. Verfahren nach einem der Ansprüche 1 bis 6, ferner umfassend:

Abfragen einer Anzahl aller Pufferobjekte in der Pufferwarteschlange durch den Synthese-Thread; und

Stoppen des Sendens der ersten Anpassungsanforderung für die Pufferobjekte an den Anwendungsprozess durch den Synthese-Thread, wenn die Anzahl aller Pufferobjekte eine maximale Pufferobjektanzahl erreicht.

11. Verfahren nach einem der Ansprüche 1 bis 6, wobei nach dem Speichern des ersten Bildframes in einem freien Pufferobjekt in einer Pufferwarteschlange das Verfahren ferner umfasst:
Erfassen und Aufzeichnen eines Speichermoments durch den Synthese-Thread, zu dem der Anwendungsprozess den ersten Bildframe in einem Zielpufferobjekt speichert.

12. Verfahren nach Anspruch 11, ferner umfassend:

Bestimmen einer Zeitdifferenz zwischen einem aktuellen Systemmoment und einem Speichermoment, zu dem ein zuletzt aufgezeichneter Bildframe im Zielpufferobjekt gespeichert wurde, durch den Synthese-Thread, wenn der Synthese-Thread eine Syntheseoperation in der Syntheseperiode des ersten Bildframes durchführt;
Senden einer zweiten Anpassungsanforderung für die Pufferobjekte an den Anwendungsprozess durch den Synthese-Thread, wenn die Zeitdifferenz größer oder gleich einem voreingestellten Zeitschwellenwert ist; und
Verringern der Anzahl der freien Pufferobjekte in der Pufferwarteschlange durch den Anwendungsprozess gemäß der zweiten Anpassungsanforderung.

13. Verfahren nach Anspruch 12, wobei die zweite Anpassungsanforderung einen zweiten Angabewert umfasst und der zweite Angabewert zum Angeben einer verringerten Anzahl von Pufferobjekten verwendet wird; und das Verringern der Anzahl der freien Pufferobjekte in der Pufferwarteschlange umfasst:
Subtrahieren von freien Pufferobjekten des zweiten Angabewerts von der Pufferwarteschlange durch den Anwendungsprozess.

14. Elektronische Vorrichtung, umfassend einen Speicher, einen Anzeigebildschirm und einen oder mehrere Prozessoren, wobei der Speicher, der Anzeigebildschirm und der Prozessor gekoppelt sind; und der Speicher Computerprogrammcode speichert, der Computerprogrammcode Computeranweisungen umfasst und wenn der Prozessor die Computeranweisungen ausführt, die elektronische Vorrichtung dazu veranlasst wird, das Verfahren nach einem der Ansprüche 1 bis 13 durchzuführen.

15. Computerlesbares Speichermedium, umfassend Computeranweisungen, wobei wenn die Computeranweisungen auf einer elektronischen Vorrichtung ausgeführt werden, die elektronische Vorrichtung dazu veranlasst wird, das Verfahren nach einem der Ansprüche 1 bis 13 durchzuführen.

**Revendications**

1. Procédé de traitement d'image, comprenant :

la réception, par un dispositif électronique, d'une première opération effectuée par un utilisateur sur un écran tactile du dispositif électronique ;
le démarrage, par le dispositif électronique, d'une première application en réponse à la première opération ;
la réception, par le dispositif électronique, d'une seconde opération effectuée par l'utilisateur sur l'écran tactile du dispositif électronique ; et
la sortie, par le dispositif électronique, de la première application en réponse à la seconde opération,
dans lequel dans un processus allant du démarrage de la première application à la sortie de la première application, le dispositif électronique effectue des opérations de dessin, de rendu et de synthèse sur une première trame d'image et une seconde trame d'image de la première application ; et
le fait d'effectuer, par le dispositif électronique, des opérations de dessin, de rendu et de synthèse sur une première trame d'image et une seconde trame d'image de la première application comprend :
l'exécution, par un processus d'application, d'un dessin et d'un rendu sur la première trame d'image dans une période de dessin et de rendu de la première trame d'image, et le stockage de la première trame d'image obtenue dans un objet tampon libre dans une file d'attente de tampons ;
**caractérisé en ce que** le fait d'effectuer comprend en outre :

l'envoi, par un thread de synthèse lorsque le thread de synthèse n'effectue aucune opération de synthèse dans une période de synthèse de la première trame d'image, d'une première requête d'ajustement au processus d'application ; et
l'augmentation, par le processus d'application sur la base de la première requête d'ajustement, d'un nombre d'objets tampons libres dans la file d'attente de tampons, pour amener le processus d'application à dessiner et à rendre la seconde trame d'image dans une période de dessin et de rendu de la seconde trame d'image, puis à stocker la seconde trame d'image obtenue dans un objet tampon libre dans la file d'attente de tampons, dans lequel la période de dessin et de rendu de la seconde trame d'image est postérieure à la période de dessin et de rendu de la première trame d'image, un moment de début de dessin de la seconde trame d'image est différent d'un moment de début de dessin de la première trame d'image de N périodes, et N est un entier positif.

2. Le procédé selon la revendication 1, dans lequel la première trame d'image et la seconde trame d'image sont des trames d'image dans un processus de démarrage de la première application.

3. Le procédé selon la revendication 2, dans lequel la première trame d'image et la seconde trame d'image sont des trames d'image dans un processus de commutation, par le dispositif électronique, d'un premier taux de rafraîchissement à un second taux de rafraîchissement dans le processus de démarrage de la première application ; et le premier taux de rafraîchissement est inférieur au second taux de rafraîchissement.

4. Le procédé selon la revendication 1, dans lequel la première trame d'image et la seconde trame d'image sont des trames d'image après que le démarrage de la première application est terminé.

5. Le procédé selon la revendication 1, dans lequel la première trame d'image et la seconde trame d'image sont des trames d'image dans un processus de sortie de la première application.

6. Le procédé selon la revendication 5, dans lequel la première trame d'image et la seconde trame d'image sont des trames d'image dans un processus de commutation, par le dispositif électronique, d'un premier taux de rafraîchissement à un second taux de rafraîchissement dans le processus de sortie de la première application ; et le premier taux de rafraîchissement est inférieur au second taux de rafraîchissement.

7. Le procédé selon l'une quelconque des revendications 1 à 6, dans lequel la période de dessin et de rendu de la seconde trame d'image est une période suivante de la période de dessin et de rendu de la première trame d'image ; et le moment de début de dessin de la seconde trame d'image est différent du moment de début de dessin de la première trame d'image d'une période.

8. Le procédé selon l'une quelconque des revendications 1 à 6, dans lequel la première requête d'ajustement comprend une première valeur d'indication ; et la première valeur d'indication est utilisée pour indiquer un nombre accru d'objets tampons, et l'augmentation d'un nombre d'objets tampons libres dans la file d'attente de tampons comprend :
l'ajout, par le processus d'application, d'objets tampons libres de la première valeur d'indication à la file d'attente de tampons.

9. Le procédé selon la revendication 8, dans lequel l'ajout, par le processus d'application, d'objets tampons libres de la première valeur d'indication à la file d'attente de tampons comprend :
l'ajout, par le processus d'application, d'adresses des objets tampons libres de la première valeur d'indication à la file d'attente de tampons selon une séquence de file d'attente.

10. Le procédé selon l'une quelconque des revendications 1 à 6, comprenant en outre :

l'interrogation, par le thread de synthèse, d'un nombre de tous les objets tampons dans la file d'attente de tampons ; et
l'arrêt, par le thread de synthèse si le nombre de tous les objets tampons atteint un nombre maximal d'objets tampons, de l'envoi de la première requête d'ajustement pour les objets tampons au processus d'application.

11. Le procédé selon l'une quelconque des revendications 1 à 6, dans lequel après le stockage de la première trame d'image dans un objet tampon libre dans une file d'attente de tampons, le procédé comprend en outre :
l'acquisition et l'enregistrement, par le thread de synthèse, d'un moment de stockage auquel le processus d'application stocke la première trame d'image dans un objet tampon cible.

12. Le procédé selon la revendication 11, comprenant en outre :

la détermination, par le thread de synthèse lorsque le thread de synthèse effectue une opération de synthèse dans la période de synthèse de la première trame d'image, d'une différence de temps entre un moment actuel du système et un moment de stockage auquel une trame d'image enregistrée en dernier est stockée dans l'objet tampon cible ;
l'envoi, par le thread de synthèse si la différence de temps est supérieure ou égale à un seuil de temps prédéfini, d'une seconde requête d'ajustement pour les objets tampons au processus d'application ; et
la réduction, par le processus d'application, du nombre d'objets tampons libres dans la file d'attente de tampons selon la seconde requête d'ajustement.

13. Le procédé selon la revendication 12, dans lequel la seconde requête d'ajustement comprend une seconde valeur d'indication, et la seconde valeur d'indication est utilisée pour indiquer un nombre réduit d'objets tampons ; et la réduction du nombre d'objets tampons libres dans la file d'attente de tampons comprend :
la soustraction, par le processus d'application, d'objets tampons libres de la seconde valeur d'indication de la file d'attente de tampons.

14. Dispositif électronique, comprenant une mémoire, un écran d'affichage, et un ou plusieurs processeurs, dans lequel la mémoire, l'écran d'affichage, et le processeur sont couplés ; et la mémoire stocke un code de programme informatique, le code de programme informatique comprend des instructions informatiques, et les instructions informatiques, lorsqu'elles sont exécutées par le processeur, amènent le dispositif électronique à effectuer le procédé selon l'une quelconque des revendications 1 à 13.

15. Support de stockage lisible par ordinateur, comprenant des instructions informatiques, dans lequel lorsque les instructions informatiques sont exécutées sur un dispositif électronique, elles amènent le dispositif électronique à effectuer le procédé selon l'une quelconque des revendications 1 à 13.

FIG. 1

FIG. 2

FIG. 3

Electronic device 100

FIG. 4

| Application layer | Camera | Calendar | Map | WLAN | Music | SMS |
| | Gallery | Call | Navigation | Bluetooth | Video | ... |

| Application framework layer | Window manager | Content provider | Image synthesis system | View system |
| | Input manager | Activity manager | Resource manager | Launcher | ... |

Android runtime

| System library | Surface manager | Three-dimensional graphics processing library |
| | Two-dimensional graphics engine | Media library | Input library |
| | Image rendering library | Image synthesis library | ... |

| Hardware abstraction layer | Hardware composer | Camera library module | ... |

| Kernel layer | Display driver | Camera driver | Touch panel driver |
| | Audio driver | Camera driver | ... |

FIG. 5

Vsync_APP signal

| | | | | | | | |
|---|---|---|---|---|---|---|---|
| Frame interval | 16.6 ms | 16.6 ms | 16.6 ms | 16.6 ms | 16.6 ms | 16.6 ms | 16.6 ms |
| Time stamp | 0 | 16.6 ms | 33.2 ms | 49.8 ms | 66.4 ms | 83 ms | 99.6 ms |
| Displacement interval between drawn images | 0 | 16 | 16 | 16 | 16 | 16 | 16 |
| Vsync-app ID | 1 | 2 | 3 | 4 | ... | ... | ... |
| Drawing and rendering | Frame 4 | Frame 5 | Frame 6 | ... | ... | ... | ... |
| Buffer queue (a maximum buffer count is 4) | Frame 2 / Frame 3 | Frame 3 / Frame 4 | Frame 4 / Frame 5 | Frame 5 / Frame 6 | Frame 6 / ... | ... / ... | ... / ... |
| Synthesis | Frame 1 | Frame 2 | Frame 3 | Frame 4 | Frame 5 | Frame 6 | ... |
| Display driver | ... | Frame 1 | Frame 2 | Frame 3 | Frame 4 | Frame 5 | Frame 6 |
| Displacement of a displayed image | 0 | 16 | 32 | 48 | 64 | 80 | 96 |
| Time interval | 16.6 ms | 16.6 ms | 16.6 ms | 16.6 ms | 16.6 ms | 16.6 ms | 16.6 ms |

Vsync_SF signal

Release a buffer of a frame 1  Release a buffer of a frame 2  Release a buffer of a frame 3  Release a buffer of a frame 4  Release a buffer of a frame 5  Release a buffer of a frame 6

FIG. 6

EP 4 538 852 B1

Queue a buffer in
which a rendered
image frame is
stored

Dequeue a buffer in
which a rendered
image frame is stored
to perform a layer
synthesis operation

Rendering thread
(producer)

Buffer queue

Synthesis thread
(consumer)

Dequeue a free buffer to
perform a storage
operation on a rendered
image frame

Queue a released
free buffer

FIG. 7

An image displacement interval at which a main application thread draws an image frame 3 and an image frame 4 is 64

Duration for which a rendering thread waits is 49.8 ms

Vsync_APP signal

| Frame interval | 16.6 ms | 16.6 ms | 16.6 ms | 16.6 ms | 16.6 ms | 16.6 ms | 16.6 ms | 16.6 ms | 16.6 ms | 16.6 ms |
|---|---|---|---|---|---|---|---|---|---|---|
| Time stamp | 0 | 16.6 ms | 33.2 ms | 49.8 ms | 66.4 ms | 83 ms | 99.6 ms | - | - | - |
| Drawing displacement of an image frame | 0 | 16 | 32 | - | - | - | 96 | - | - | - |
| Vsync-app ID | 1 | 2 | 3 | 4 | 5 | 6 | 7 | 8 | 9 | 10 |
| Drawing and rendering | Frame 1 | Frame 2 | Frame 3 | - | - | - | Frame 4 | - | - | - |
| Buffer queue (a maximum buffer count is 3) | - | Frame 1 | Frame 2 | Frame 2 | Frame 2 | Frame 2 | Frame 3 | Frame 4 | - | - |
| Synthesis | - | - | Frame 1 | - | - | - | Frame 2 | Frame 3 | Frame 4 | - |
| Display | - | - | - | Frame 1 | Frame 1 | Frame 1 | Frame 1 | Frame 2 | Frame 3 | Frame 4 |
| Displacement of a displayed image | 0 | 0 | 0 | 0 | 0 | 0 | 0 | 16 | 80 | 80 |
| Time interval | 16.6 ms | 16.6 ms | 16.6 ms | 16.6 ms | 16.6 ms | 16.6 ms | 16.6 ms | 16.6 ms | 16.6 ms | 16.6 ms |

Vsync_SF signal

Release a buffer of a frame 1
Release a buffer of a frame 2
Release a buffer of a frame 3
Release a buffer of a frame 4

A displacement interval between displayed images is 64

FIG. 8

EP 4 538 852 B1

Application                                    Surface flinger                              HWC

S101. A Vsync thread of a surface flinger sends
a Vsync_APP signal to a main application
thread of the application

S102. The main application thread begins to
perform measurement, layout, and drawing

S103. The main application thread awakens a
rendering thread of the application to perform a
rendering operation

S104. The rendering thread acquires a free
buffer from a buffer queue through the main
application thread

S105. A last free buffer in the buffer queue is
occupied by the rendering thread

S106. The rendering thread stores the rendered image
frame into a buffer, and updates a state of the buffer
through the main application thread

S201. A Vsync thread of a surface flinger sends
a Vsync_SF signal to the synthesis thread

S202. The synthesis thread performs no
synthesis operation

S301. A Vsync thread of a surface flinger sends
a Vsync_APP signal to a main application
thread

TO FIG. 9B

FIG. 9A

EP 4 538 852 B1

S302. The main application thread begins to perform measurement, layout, and drawing

S303. The main application thread awakens a rendering thread to perform a rendering operation

S304. The rendering thread acquires a free buffer from a buffer queue through the main application thread

S305. The buffer queue has no free buffer, and the rendering thread waits for a synthesis thread to release a buffer

S401. A Vsync thread sends a Vsync_SF signal to the synthesis thread

S402. The synthesis thread begins to perform synthesis, and sends a synthesized image frame to the HWC for sending and display after the synthesis ends

S403. The HWC returns buffer information of a free buffer for which sending for display is completed to the synthesis thread

S404. The synthesis thread returns the buffer information of the buffer to the main application thread

S405. The main application thread updates a state of the buffer in the buffer queue according to the buffer information, adds 1 to a count of free buffers in the buffer queue, and awakens a rendering thread to perform rendering

S406. The rendering thread dequeues a free buffer from the buffer queue through the main application thread to perform a storage operation on a rendered image frame, and updates a state of the buffer through the main application thread

FIG. 9B

EP 4 538 852 B1

EP 4 538 852 B1

| Period | 1 | 2 | 3 | 4 | 5 | 6 |
|---|---|---|---|---|---|---|

The main application thread calculates a displacement of an image frame based on a current system time, and displacements of adjacent image frames are excessively large

**Drawing**

| Frame 11: displacement+16 | Frame 12: displacement+16 | Frame 13: displacement+16 | | | Frame 14: displacement+48 |
|---|---|---|---|---|---|

**Rendering**

| | | | Dequeued buffer | Queued buffer | |
|---|---|---|---|---|---|

The count of queued buffers reaches the maximum buffer count of the buffer queue, and there is no available free buffer in the buffer queue

**Count of queued buffers**

**Synthesis**

| Synthesis | - | - | - | Synthesis | |
|---|---|---|---|---|---|

**Display**

| ... | ... | ... | Frame 9: displacement+16 | Frame 10: displacement+16 | Frame 11: displacement+16 |
|---|---|---|---|---|---|

↑ Release a buffer occupied by a frame 9

↑ Release a buffer occupied by a frame 10

FIG. 10

Launcher

Application
process

Synthesis
thread

S501. An electronic device
receives a first operation
performed by a user on a touch
screen of the electronic device

S502. The electronic device starts
a first application in response to
the first operation

In a
process of
starting the
first
application

S503. An application process performs drawing
and rendering on the first image frame in a
drawing and rendering period of the first image
frame, and stores the obtained first image frame
into a free buffer object in a buffer queue

S504. A synthesis thread sends, when
the synthesis thread performs no
synthesis operation in a synthesis
period of the first image frame, a first
adjustment request to the application
process

S505. The application process increases, based on
the first adjustment request, a count of free buffer
objects in the buffer queue, to cause the
application process to draw and render the second
image frame in a drawing and rendering period of
the second image frame and then store the
obtained second image frame into a free buffer
object in the buffer queue

FIG. 11

FIG. 12

| Launcher | Application process | Synthesis thread |
|---|---|---|

S601. The electronic device receives a second operation performed by the user on the touch screen of the electronic device

S602. The electronic device exits the first application in response to the second operation

In a process of exiting the first application

S503. An application process performs drawing and rendering on the first image frame in a drawing and rendering period of the first image frame, and stores the obtained first image frame into a free buffer object in a buffer queue

S504. A synthesis thread sends, when the synthesis thread performs no synthesis operation in a synthesis period of the first image frame, a first adjustment request to the application process

S505. The application process increases, based on the first adjustment request, a count of free buffer objects in the buffer queue, to cause the application process to draw and render the second image frame in a drawing and rendering period of the second image frame and then store the obtained second image frame into a free buffer object in the buffer queue

FIG. 13

Application                                    Surface flinger                                    HWC

S1101. A Vsync thread of a surface flinger sends a
Vsync_APP signal to a main application thread of the
application

S1102. The main application thread begins to
perform measurement, layout, and drawing

S1103. The main application thread awakens a
rendering thread of the application to perform a
rendering operation

S1104. The rendering thread dequeues a free buffer
from a buffer queue through the main application
thread

S1105. A last free buffer in the buffer queue is
occupied by the rendering thread

S1106. The main application thread updates the state of the
buffer, and sends a response to the synthesis thread

S1201. A Vsync thread of a surface flinger sends a
Vsync_SF signal to the synthesis thread

S1202. The synthesis thread performs no synthesis
operation

S1203. The synthesis thread determines to increase a
maximum buffer count of the buffer queue by 1

S1204. The main application thread adds one
available buffer to the buffer queue, to increase the
maximum buffer count of the buffer queue by 1

S1301. A Vsync thread of a surface flinger sends a
Vsync_APP signal to a main application thread

TO FIG. 14B

FIG. 14A

S1302. The main application thread begins to perform measurement, layout, and drawing

S1303. The main application thread awakens a rendering thread to perform a rendering operation

S1304. The rendering thread dequeues a free buffer from a buffer queue through the main application thread

S1305. Acquire a last free buffer

S1306. The rendering thread stores the rendered image frame into a buffer, and the main application thread sends a response to the synthesis thread

S1307. The synthesis thread records a time at which a buffer is queued

S1401. A Vsync thread of a surface flinger sends a Vsync_SF signal to the synthesis thread

S1402. The synthesis thread begins to perform synthesis, and sends a synthesized image frame to the HWC for sending and display after the synthesis ends

S1403. The HWC returns buffer information of a released buffer to the synthesis thread

S1404. The synthesis thread returns the buffer information to the main application thread through a callback function

S1501. A Vsync thread sends a Vsync_SF message to the synthesis thread

S1502. The synthesis thread begins to perform synthesis, and sends a synthesized image frame to the HWC after the synthesis ends

FIG. 14B

EP 4 538 852 B1

S1503. The synthesis thread acquires a time at which a buffer is queued last, calculates a difference between a current system time and the time at which a buffer is queued last, and makes, when the difference is greater than or equal to a preset threshold, a decision to begin to dynamically reduce the maximum buffer count of the buffer queue

S1601. A Vsync thread sends a Vsync_SF message to the synthesis thread

S1602. The synthesis thread begins to perform synthesis, and sends a synthesized image frame to the HWC after the synthesis ends

S1603. The HWC returns buffer information of a released buffer to the synthesis thread

S1604. The synthesis thread sends the buffer information of the buffer back to the main application thread through a callback function, and sends a request for reducing a maximum buffer count of the buffer queue by 1 to the main application thread

S1605. The main application thread removes a free buffer from the buffer queue, and updates the removed buffer to an unavailable buffer

FIG. 14C

EP 4 538 852 B1

EP 4 538 852 B1

| Period | 1 | 2 | 3 | 4 | 5 | 6 | 7 |
|---|---|---|---|---|---|---|---|
| Drawing | Frame 11: displacement +16 | Frame 12: displacement +16 | Frame 13: displacement +16 | Frame 14: displacement +16 | Frame 15: displacement +16 | | |
| Rendering | | | | | | | |
| Count of queued buffers | | | Maximum buffer count +1 | Maximum buffer count +1 | | Maximum buffer count −1 | Maximum buffer count −1 |
| Synthesis | Synthesis | - | - | - | Synthesis | Synthesis | Synthesis |
| Screen | ... | ... | ... | Frame 9: displacement+16 | Frame 10: displacement+16 | Frame 11: displacement +16 | Frame 12: displacement+16 |
| | | | | | Release a buffer occupied by a frame 9 | Release a buffer occupied by a frame 10 | Release a buffer occupied by a frame 11 |

FIG. 15

FIG. 16

**REFERENCES CITED IN THE DESCRIPTION**

**Patent documents cited in the description**

- CN 202211253545
- CN 114092595 A